# EUROPEAN PATENT APPLICATION

(11) **EP 1 331 485 A2**
(43) Date of publication of application: **30.07.2003**
(21) Application number: 03001294.2
(22) Date of filing: 22.01.2003
(51) Int. Cl.: G01N 35/00, G01N 33/52

(54) **Biochemical analysis unit with absorptive zones**

(30) Priority: 29.01.2002 JP 2002020348
(71) Applicant: FUJI PHOTO FILM CO., LTD., Kanagawa 250-01 (JP)
(72) Inventor: Ogura, Nobuhiko, Fuji Photo Film Co.Ltd., Ashigarakami-gun, Kanagawa (JP)
(74) Representative: Klunker . Schmitt-Nilson . Hirsch

(57) **Abstract**

A biochemical analysis unit includes a plate-like member made of a material capable of attenuating light energy and formed with a plurality of through-holes, a plurality of absorptive regions formed by charging an absorptive membrane formed of an absorptive material at positions corresponding to those of the plurality of through-holes and light attenuating regions having a property of attenuating light energy and formed at regions in the absorptive membrane between the neighboring absorptive regions so as to be adjacent to the plate-like member in a thickness direction of the absorptive membrane. According to the biochemical analysis unit, it is possible to produce biochemical analysis data having an excellent quantitative characteristic even in the case of forming a number of the absorptive regions labeled with a labeling substance which generates chemiluminescence emission when it contacts a chemiluminescent substrate or a fluorescent substance in a biochemical analysis unit.

## Description

### BACKGROUND OF THE INVENTION

The present invention relates to a biochemical analysis unit and, particularly, to a biochemical analysis unit which can produce biochemical analysis data having an excellent quantitative characteristic even in the case of forming at a high density on a biochemical analysis unit a plurality of spot-like regions containing specific binding substances which can specifically bind with a substance derived from a living organism and whose sequence, base length, composition and the like are known, selectively binding, using a hybridization method or the like, the specific binding substances contained in the plurality of spot-like regions with a substance derived from a living organism and labeled with a labeling substance which generates chemiluminescence emission when it contacts a chemiluminescent substrate and/or a fluorescent substance or selectively binding, using an antigen-antibody reaction, the specific binding substances contained in the plurality of spot-like regions with a substance derived from a living organism and labeled with a hapten by hybridization and an antibody for the hapten labeled with an enzyme having a property to generate chemiluminescence emission when it contacts a chemiluminescent substrate with the hapten and/or an enzyme having a property to generate a fluorescent substance when it contacts a fluorescent substrate, bringing the labeling substance selectively contained in the plurality of absorptive regions of the biochemical analysis unit into contact with a chemiluminescent substrate and photoelectrically detecting chemiluminescence emission generated by the contact of a chemiluminescent substrate and the labeling substance, and/or irradiating the plurality of spot-like regions formed in the biochemical analysis unit with a stimulating ray and photoelectrically detecting fluorescence emission.

### DESCRIPTION OF THE PRIOR ART

An autoradiographic analyzing system using as a detecting material for detecting radiation a stimulable phosphor which can absorb, store and record the energy of radiation when it is irradiated with radiation and which, when it is then stimulated by an electromagnetic wave having a specified wavelength, can release stimulated emission whose light amount corresponds to the amount of radiation with which it was irradiated is known, which comprises the steps of introducing a radioactively labeled substance into an organism, using the organism or a part of the tissue of the organism as a specimen, superposing the specimen and a stimulable phosphor sheet formed with a stimulable phosphor layer for a certain period of time, storing and recording radiation energy in a stimulable phosphor contained in the stimulable phosphor layer, scanning the stimulable phosphor layer with an electromagnetic wave to excite the stimulable phosphor, photoelectrically detecting the stimulated emission released from the stimulable phosphor to produce digital image signals, effecting image processing on the obtained digital image signals, and reproducing an image on displaying means such as a CRT or the like or a photographic film (see, for example, Japanese Patent Publication No. 1-60784, Japanese Patent Publication No. 1-60782, Japanese Patent Publication No. 4-3952 and the like).

Unlike the autoradiographic analyzing system using a photographic film, according to the autoradiographic analyzing system using the stimulable phosphor as a detecting material, development, which is chemical processing, becomes unnecessary. Further, it is possible reproduce a desired image by effecting image processing on the obtained image data and effect quantitative analysis using a computer. Use of a stimulable phosphor in these processes is therefore advantageous.

On the other hand, a fluorescence analyzing system using a fluorescent substance as a labeling substance instead of a radioactive labeling substance in the autoradiographic analyzing system is known. According to this system, it is possible to study a genetic sequence, study the expression level of a gene, and to effect separation or identification of protein or estimation of the molecular weight or properties of protein or the like. For example, this system can perform a process including the steps of distributing a plurality of DNA fragments on a gel support by means of electrophoresis after a fluorescent dye was added to a solution containing a plurality of DNA fragments to be distributed, or distributing a plurality of DNA fragments on a gel support containing a fluorescent dye, or dipping a gel support on which a plurality of DNA fragments have been distributed by means of electrophoresis in a solution containing a fluorescent dye, thereby labeling the electrophoresed DNA fragments, exciting the fluorescent dye by a stimulating ray to cause it to release fluorescent light, detecting the released fluorescent light to produce an image and detecting the distribution of the DNA fragments on the gel support. This system can also perform a process including the steps of distributing a plurality of DNA fragments on a gel support by means of electrophoresis, denaturing the DNA fragments, transferring at least a part of the denatured DNA fragments onto a transfer support such as a nitrocellulose support by the Southern-blotting method, hybridizing a probe prepared by labeling target DNA and DNA or RNA complementary thereto with the denatured DNA fragments, thereby selectively labeling only the DNA fragments complementary to the probe DNA or probe RNA, exciting the fluorescent dye by a stimulating ray to cause it to release fluorescent light, detecting the released fluorescent light to produce an image and detecting the distribution of the target DNA on the transfer support. This system can further perform a process including the steps of preparing a DNA probe complementary to DNA containing a target gene labeled by a labeling substance, hybridizing it with DNA on a transfer support, combining an enzyme with the complementary DNA labeled by a labeling substance, causing the enzyme to contact a fluorescent substance, transforming the fluorescent substance to a fluorescent substance having fluorescent light releasing property, exciting the thus produced fluorescent substance by a stimulating ray to release fluorescent light, detecting the fluorescent light to produce an image and detecting the distribution of the target DNA on the transfer support. This fluorescence detecting system is advantageous in that a genetic sequence or the like can be easily detected without using a radioactive substance.

Similarly, there is known a chemiluminescence detecting system comprising the steps of fixing a substance derived from a living organism such as a protein or a nucleic acid sequence on a support, selectively labeling the substance derived from a living organism with a labeling substance which generates chemiluminescent emission when it contacts a chemiluminescent substrate, contacting the substance derived from a living organism and selectively labeled with the labeling substance and the chemiluminescent substrate, photoelectrically detecting the chemiluminescent emission in the wavelength of visible light generated by the contact of the chemiluminescent substrate and the labeling substance to produce digital image signals, effecting image processing thereon, and reproducing a chemiluminescent image on a display means such as a CRT or a recording material such as a photographic film, thereby obtaining information relating to the high molecular substance such as genetic information.

Further, a micro-array analyzing system has been recently developed, which comprises the steps of using a spotting device to drop at different positions on the surface of a carrier such as a slide glass plate, a membrane filter or the like specific binding substances, which can specifically bind with a substance derived from a living organism such as a cell, virus, hormone, tumor marker, enzyme, antibody, antigen, abzyme, other protein, a nuclear acid, cDNA, DNA, RNA or the like and whose sequence, base length, composition and the like are known, thereby forming a number of independent spots, specifically binding the specific binding substances using a hybridization method or the like with a substance derived from a living organism such as a cell, virus, hormone, tumor marker, enzyme, antibody, antigen, abzyme, other protein, a nuclear acid, cDNA, DNA or mRNA by extraction, isolation or the like and optionally further subjected to chemical processing, chemical modification or the like and which is labeled with a labeling substance such as a fluorescent substance, dye or the like, thereby forming a micro-array, irradiating the micro-array with a stimulating ray, photoelectrically detecting light such as fluorescence emission released from a labeling substance such as a fluorescent substance, dye or the like, and analyzing the substance derived from a living organism. This micro-array analyzing system is advantageous in that a substance derived from a living organism can be analyzed in a short time period by forming a number of spots of specific binding substances at different positions of the surface of a carrier such as a slide glass plate at high density and hybridizing them with a substance derived from a living organism and labeled with a labeling substance.

As described above, in the field of biochemical analysis, it is often required to analyze a substance derived from a living organism by forming a plurality of spot-like regions containing specific binding substances at different positions on the surface of a biochemical analysis unit such as a membrane filter or the like, which can specifically bind with a substance derived from a living organism such as a cell, virus, hormone, tumor marker, enzyme, antibody, antigen, abzyme, other protein, a nuclear acid, cDNA, DNA, RNA or the like and whose sequence, base length, composition and the like are known, specifically binding, using a hybridization method or the like, the specific binding substances contained in the plurality of spot-like regions with a substance derived from a living organism and labeled with a labeling substance which generates chemiluminescence emission when it contacts a chemiluminescent substrate and/or a fluorescent substance, thereby selectively labeling them, bringing the plurality of spot-like regions to come into contact with a chemiluminescent substrate and photoelectrically detecting chemiluminescence emission generated by the contact of a chemiluminescent substrate and the labeling substance, or irradiating the plurality of spot-like regions formed in the biochemical analysis unit with a stimulating ray and photoelectrically detecting fluorescence emission released from the fluorescent substance. In this case, chemiluminescent emission or fluorescence emission released from any particular spot-like region is scattered in the biochemical analysis unit such as a membrane filter, or chemiluminescent emission or fluorescence emission released from the spot-like regions is scattered and mixed with chemiluminescent emission or fluorescence emission released from neighboring spot-like regions, thereby generating noise in biochemical analysis data produced by photoelectrically detecting chemiluminescent emission or fluorescence emission.

### SUMMARY OF THE INVENTION

It is therefore an object of the present invention to provide a biochemical analysis unit which can produce biochemical analysis data having an excellent quantitative characteristic even in the case of forming at a high density on a biochemical analysis unit a plurality of spot-like regions containing specific binding substances which can specifically bind with a substance derived from a living organism and whose sequence, base length, composition and the like are known, selectively binding, using a hybridization method or the like, the specific binding substances contained in the plurality of spot-like regions with a substance derived from a living organism and labeled with a labeling substance which generates chemiluminescence emission when it contacts a chemiluminescent substrate and/or a fluorescent substance or selectively binding, using an antigen-antibody reaction, the specific binding substances contained in the plurality of spot-like regions with a substance derived from a living organism and labeled with a hapten by hybridization and an antibody for the hapten labeled with an enzyme having a property to generate chemiluminescence emission when it contacts a chemiluminescent substrate with the hapten and/or an enzyme having a property to generate a fluorescent substance when it contacts a fluorescent substrate, bringing the labeling substance selectively contained in the plurality of absorptive regions of the biochemical analysis unit into contact with a chemiluminescent substrate and photoelectrically detecting chemiluminescence emission generated by the contact of a chemiluminescent substrate and the labeling substance, and/or irradiating the plurality of spot-like regions formed in the biochemical analysis unit with a stimulating ray and photoelectrically detecting fluorescence emission.

The above other objects of the present invention can be accomplished by a biochemical analysis unit comprising a plate-like member made of a material capable of attenuating light energy and formed with a plurality of through-holes, a plurality of absorptive regions formed by charging an absorptive membrane formed of an absorptive material at positions corresponding to those of the plurality of through-holes formed in the plate-like member and light attenuating regions having a property of attenuating light energy and formed at regions in the absorptive membrane between the neighboring absorptive regions so as to be adjacent to the plate-like member in a thickness direction of the absorptive membrane.

According to the present invention, since a biochemical analysis unit comprises plate-like member made of a material capable of attenuating light energy and formed with a plurality of through-holes, a plurality of absorptive regions formed by charging an absorptive membrane formed of an absorptive material at positions corresponding to those of the plurality of through-holes formed in the plate-like member and light attenuating regions having a property of attenuating light energy and formed at regions in the absorptive membrane between the neighboring absorptive regions so as to be adjacent to the plate-like member in a thickness direction of the absorptive membrane, in the case of spotting a solution containing specific binding substances which can specifically bind with a substance derived from a living organism and whose sequence, base length, composition and the like are known in the plurality of absorptive regions formed in the biochemical analysis unit to be absorbed therein, specifically binding the specific binding substances absorbed in the plurality of absorptive regions with a substance derived from a living organism and labeled with a labeling substance which generates chemiluminescence emission when it contacts a chemiluminescent substrate or a fluorescent substance to selectively label the plurality of absorptive regions, bringing the plurality of absorptive regions into contact with a chemiluminescent substrate and photoelectrically detecting chemiluminescence emission released from the labeling substance, or irradiating the plurality of absorptive regions with a stimulating ray and photoelectrically detecting fluorescence emission released from the fluorescent substance, thereby producing biochemical analysis data, the plate-like member made of a material capable of attenuating light energy and the light attenuating regions having a property of attenuating light energy are present around each of the plurality of absorptive regions and, therefore, it is possible to reliably prevent chemiluminescence emission or fluorescence emission from being scattered. Accordingly, it is possible to effectively prevent noise caused by the scattering of chemiluminescence emission or fluorescence emission from being generated in biochemical analysis data produced by photoelectrically detecting chemiluminescence emission or fluorescence emission.

In a preferred aspect of the present invention, the plurality of absorptive regions are formed by pressing the absorptive membrane in the plurality of through-holes formed in the plate-like member.

According to this preferred aspect of the present invention, since the plurality of absorptive regions can be formed simply by pressing the absorptive membrane in the plurality of through-holes formed in the plate-like member, it is possible to manufacture the biochemical analysis unit in a simple manner.

In a further preferred aspect of the present invention, the plurality of absorptive regions are formed by pressing the absorptive membrane in the plurality of through-holes formed in the plate-like member using a heat press process.

According to this preferred aspect of the present invention, since the plurality of absorptive regions can be formed simply by pressing the absorptive membrane in the plurality of through-holes formed in the plate-like member using a heat press process, it is possible to manufacture the biochemical analysis unit in a simple manner at low cost.

In another preferred aspect of the present invention, the plurality of absorptive regions are formed by pressing the absorptive membrane in the plurality of through-holes formed in the plate-like member using a calender roll process.

According to this preferred aspect of the present invention, since the plurality of absorptive regions can be formed simply by pressing the absorptive membrane in the plurality of through-holes formed in the plate-like member using a calender roll process, it is possible to manufacture the biochemical analysis unit in a simple manner at low cost.

In a further preferred aspect of the present invention, the plate-like member and the absorptive membrane are bonded with an adhesive agent.

According to this preferred aspect of the present invention, since the plate-like member and the absorptive membrane are bonded with an adhesive agent, it is possible to firmly integrate the plate-like member and the absorptive membrane.

In a further preferred aspect of the present invention, the plate-like member and the absorptive membrane are bonded with an adhesive agent containing a material capable attenuating light energy and the light attenuating regions are formed of the material capable attenuating light energy contained in the adhesive agent.

According to this preferred aspect of the present invention, since the material capable attenuating light energy permeates the absorptive membrane simply by causing the adhesive agent to contain the material capable attenuating light energy, whereby the light attenuating regions can be formed, it is possible to form the light attenuating regions at desired regions in the absorptive membrane in a simple manner.

In another preferred aspect of the present invention, the light attenuating regions are formed of a material capable attenuating light energy printed on a surface of the absorptive membrane located between the neighboring absorptive regions opposite to the plate-like member.

According to this preferred aspect of the present invention, since the material capable attenuating light energy permeates the absorptive membrane simply by printing the material capable attenuating light energy on the surface of the absorptive membrane located between the neighboring absorptive regions opposite to the plate-like member, whereby the light attenuating regions can be formed, it is possible to form the light attenuating regions at desired regions in the absorptive membrane in a simple manner.

In a preferred aspect of the present invention, the plate-like member is made of a material that reduces the energy of light to 1/5 or less when the light travels in the plate-like member by a distance equal to that between neighboring absorptive regions.

In a further preferred aspect of the present invention, the plate-like member is made of a material that reduces the energy of light to 1/10 or less when the light travels in the plate-like member by a distance equal to that between neighboring absorptive regions.

In a further preferred aspect of the present invention, the plate-like member is made of a material that reduces the energy of light to 1/50 or less when the light travels in the plate-like member by a distance equal to that between neighboring absorptive regions.

In a further preferred aspect of the present invention, the plate-like member is made of a material that reduces the energy of light to 1/100 or less when the light travels in the plate-like member by a distance equal to that between neighboring absorptive regions.

In a further preferred aspect of the present invention, the plate-like member is made of a material that reduces the energy of light to 1/500 or less when the light travels in the plate-like member by a distance equal to that between neighboring absorptive regions.

In a further preferred aspect of the present invention, the plate-like member is made of a material that reduces the energy of light to 1/1,000 or less when the light travels in the plate-like member by a distance equal to that between neighboring absorptive regions.

In a preferred aspect of the present invention, each of the light attenuating regions is formed of a material that reduces the energy of light to 1/5 or less when the light travels in the light attenuating region by a distance equal to that between neighboring absorptive regions.

In a further preferred aspect of the present invention, each of the light attenuating regions is formed of a material that reduces the energy of light to 1/10 or less when the light travels in the light attenuating region by a distance equal to that between neighboring absorptive regions.

In a further preferred aspect of the present invention, each of the light attenuating regions is formed of a material that reduces the energy of light to 1/50 or less when the light travels in the light attenuating region by a distance equal to that between neighboring absorptive regions.

In a further preferred aspect of the present invention, each of the light attenuating regions is formed of a material that reduces the energy of light to 1/100 or less when the light travels in the light attenuating region by a distance equal to that between neighboring absorptive regions.

In a further preferred aspect of the present invention, each of the light attenuating regions is formed of a material that reduces the energy of light to 1/500 or less when the light travels in the light attenuating region by a distance equal to that between neighboring absorptive regions.

In a further preferred aspect of the present invention, each of the light attenuating regions is formed of a material that reduces the energy of light to 1/1,000 or less when the light travels in the light attenuating region by a distance equal to that between neighboring absorptive regions.

In a preferred aspect of the present invention, each of the light attenuating regions is formed of a dye and a pigment.

In the present invention, a dye or pigment used for forming the light attenuating regions may be of any type insofar as it has a property of attenuating light energy but is not particularly limited. Illustrative examples of a blue or green organic coloring agent preferably used in the present invention include Zapon Fast Blue 3G (available from Hoechst AG), Estrol Brill Blue N-3RL (availble from Sumitomo Chemical Co., Ltd.), D & C Blue No. 1 (available from National Aniline AG), Spirit Blue (available from Hodogaya Chemical Co., Ltd.), Oil Blue No. 603 (available from Orient Co., Ltd.), Kiton Blue A (available from Ciba-Geigy), Aizen Cathilon Blue GLH (available from Hodogaya Chemical Co., Ltd.), Lake Blue A, F, H (available from Kyowa Chemical Co., Ltd.), Rodarin Blue 6GX (available from Hodogaya Chemical Co., Ltd.), Primocyanine 6GX (available from Inahata Sangyo Co., Ltd.), Brillacid Green 6BH (available from Hodogaya Chemical Co., Ltd.), Cyanine Blue BNRS (available from Toyo Ink Mfg. Co., Ltd.), and Lionol Blue SL (available from Toyo Ink Mfg. Co., Ltd.).

In the present invention, illustrative examples of a blue or green inorganic coloring agent preferably used in the present invention include ultramarine, cobalt blue, cerulean blue, chromic oxide, a TiO2-ZnO-NiO system pigment and the like.

In the present invention, illustrative examples of a red or yellow coloring agent include a dye such as an azo dye, an acridine dye, a quinoline dye, a thiazole dye, a nitrodye and the like and a pigment such as molybdenum orange, cadmium yellow, chrome yellow, zinc chromate, red lead and the like. Further, carbon black can be used as the material capable of attenuating light energy.

In a preferred aspect of the present invention, the biochemical analysis unit is formed with 10 or more absorptive regions.

In a further preferred aspect of the present invention, the biochemical analysis unit is formed with 50 or more absorptive regions.

In a further preferred aspect of the present invention, the biochemical analysis unit is formed with 100 or more absorptive regions.

In a further preferred aspect of the present invention, the biochemical analysis unit is formed with 500 or more absorptive regions.

In a further preferred aspect of the present invention, the biochemical analysis unit is formed with 1,000 or more absorptive regions.

In a further preferred aspect of the present invention, the biochemical analysis unit is formed with 5,000 or more absorptive regions.

In a further preferred aspect of the present invention, the biochemical analysis unit is formed with 10,000 or more absorptive regions.

In a further preferred aspect of the present invention, the biochemical analysis unit is formed with 50,000 or more absorptive regions.

In a further preferred aspect of the present invention, the substrate of the biochemical analysis unit is formed with 100,000 or more absorptive regions.

In a preferred aspect of the present invention, each of the plurality of absorptive regions formed in the biochemical analysis unit has a size of less than 5 mm².

In a further preferred aspect of the present invention, each of the plurality of absorptive regions formed in the biochemical analysis unit has a size of less than 1 mm².

In a further preferred aspect of the present invention, each of the plurality of absorptive regions formed in the biochemical analysis unit has a size of less than 0.5 mm².

In a further preferred aspect of the present invention, each of the plurality of absorptive regions formed in the biochemical analysis unit has a size of less than 0.1 mm².

In a further preferred aspect of the present invention, each of the plurality of absorptive regions formed in the biochemical analysis unit has a size of less than 0.05 mm².

In a further preferred aspect of the present invention, each of the plurality of absorptive regions formed in the biochemical analysis unit has a size of less than 0.01 mm².

In a preferred aspect of the present invention, the plurality of absorptive regions are formed in the biochemical analysis unit at a density of 10 or more per cm².

In a further preferred aspect of the present invention, the plurality of absorptive regions are formed in the biochemical analysis unit at a density of 50 or more per cm².

In a further preferred aspect of the present invention, the plurality of absorptive regions are formed in the biochemical analysis unit at a density of 100 or more per cm².

In a further preferred aspect of the present invention, the plurality of absorptive regions are formed in the biochemical analysis unit at a density of 500 or more per cm².

In a further preferred aspect of the present invention, the plurality of absorptive regions are formed in the biochemical analysis unit at a density of 1,000 or more per cm².

In a further preferred aspect of the present invention, the plurality of absorptive regions are formed in the biochemical analysis unit at a density of 5,000 or more per cm².

In a further preferred aspect of the present invention, the plurality of absorptive regions are formed in the biochemical analysis unit at a density of 10,000 or more per cm².

In a further preferred aspect of the present invention, the plurality of absorptive regions are formed in the biochemical analysis unit at a density of 50,000 or more per cm².

In a further preferred aspect of the present invention, the plurality of absorptive regions are formed in the biochemical analysis unit at a density of 100,000 or more per cm².

In a preferred aspect of the present invention, the plurality of absorptive regions are formed in the biochemical analysis unit in a regular pattern.

In a preferred aspect of the present invention, each of the plurality of absorptive regions is formed in the biochemical analysis unit so as to have having a substantially circular shape.

In a preferred aspect of the present invention, the plate-like member of the biochemical analysis unit further has a property of attenuating radiation energy.

According to this preferred aspect of the present invention, since the plate-like member of the biochemical analysis unit further has a property of attenuating radiation energy, in the case of forming the plurality of absorptive regions in the biochemical analysis unit at a high density, hybridizing specific binding substances contained in the plurality of absorptive regions of the biochemical analysis unit with a substance derived from a living organism and labeled with a radioactive labeling substance to selectively label them, superposing the biochemical analysis unit on a stimulable phosphor sheet formed with a stimulable phosphor layer and exposing the stimulable phosphor layer formed on a support of the stimulable phosphor sheet to the radioactive labeling substance selectively contained in the plurality of absorptive regions, it is possible to effectively prevent electron beams (β rays) released from the radioactive labeling substance contained in the individual absorptive regions from being scattered in the plate-like member. Therefore, since it is possible to cause electron beams (β rays) released from the radioactive labeling substance contained in the individual absorptive regions to selectively impinge on the corresponding regions of the stimulable phosphor layer, whereby only the corresponding regions of the stimulable phosphor layer can be exposed to electron beams (β rays), it is possible to produce biochemical analysis data having an excellent quantitative characteristic with a high resolution by scanning the stimulable phosphor layer exposed to the radioactive labeling substance with a stimulating ray and photoelectrically detecting stimulated emission released from the stimulable phosphor layer.

In a preferred aspect of the present invention, the plate-like member of the biochemical analysis unit is made of a material that reduces the energy of radiation to 1/5 or less when the radiation travels in the plate-like member by a distance equal to that between neighboring absorptive regions.

In a further preferred aspect of the present invention, the plate-like member of the biochemical analysis unit is made of a material that reduces the energy of radiation to 1/10 or less when the radiation travels in the plate-like member by a distance equal to that between neighboring absorptive regions.

In a further preferred aspect of the present invention, the plate-like member of the biochemical analysis unit is made of a material that reduces the energy of radiation to 1/50 or less when the radiation travels in the plate-like member by a distance equal to that between neighboring absorptive regions.

In a further preferred aspect of the present invention, the plate-like member of the biochemical analysis unit is made of a material that reduces the energy of radiation to 1/100 or less when the radiation travels in the plate-like member by a distance equal to that between neighboring absorptive regions.

In a further preferred aspect of the present invention, the plate-like member of the biochemical analysis unit is made of a material that reduces the energy of radiation to 1/500 or less when the radiation travels in the plate-like member by a distance equal to that between neighboring absorptive regions.

In a further preferred aspect of the present invention, the plate-like member of the biochemical analysis unit is made of a material that reduces the energy of radiation to 1/1,000 or less when the radiation travels in the plate-like member by a distance equal to that between neighboring absorptive regions.

In the present invention, the material for forming the plate-like member of the biochemical analysis unit preferably has a property of attenuating radiation energy but is not particularly limited as far as it can attenuate light energy. The material for forming the plate-like member of the biochemical analysis unit may be any type of inorganic compound material or organic compound material and the plate-like member of the biochemical analysis unit can preferably be formed of a metal material, a ceramic material or a plastic material.

Illustrative examples of inorganic compound materials preferably usable for forming the plate-like member of the biochemical analysis unit in the present invention include metals such as gold, silver, copper, zinc, aluminum, titanium, tantalum, chromium, iron, nickel, cobalt, lead, tin, selenium and the like; alloys such as brass, stainless steel, bronze and the like; silicon materials such as silicon, amorphous silicon, glass, quartz, silicon carbide, silicon nitride and the like; metal oxides such as aluminum oxide, magnesium oxide, zirconium oxide and the like; and inorganic salts such as tungsten carbide, calcium carbide, calcium sulfate, hydroxy apatite, gallium arsenide and the like. These may have either a monocrystal structure or a polycrystal sintered structure such as amorphous, ceramic or the like.

In the present invention, a high molecular compound can preferably be used as an organic compound material preferably usable for forming the plate-like member of the biochemical analysis unit. Illustrative examples of high molecular compounds preferably usable for forming the plate-like member of the biochemical analysis unit in the present invention include polyolefins such as polyethylene, polypropylene and the like; acrylic resins such as polymethyl methacrylate, polybutylacrylate/polymethyl methacrylate copolymer and the like; polyacrylonitrile; polyvinyl chloride; polyvinylidene chloride; polyvinylidene fluoride; polytetrafluoroethylene; polychlorotrifluoroethylene; polycarbonate; polyesters such as polyethylene naphthalate, polyethylene terephthalate and the like; nylons such as nylon-6, nylon-6,6, nylon-4,10 and the like; polyimide; polysulfone; polyphenylene sulfide; silicon resins such as polydiphenyl siloxane and the like; phenol resins such as novolac and the like; epoxy resin; polyurethane; polystyrene, butadiene-styrene copolymer; polysaccharides such as cellulose, acetyl cellulose, nitrocellulose, starch, calcium alginate, hydroxypropyl methyl cellulose and the like; chitin; chitosan; urushi (Japanese lacquer); polyamides such as gelatin, collagen, keratin and the like; and copolymers of these high molecular materials. These may be a composite compound, and metal oxide particles, glass fiber or the like may be added thereto as occasion demands. Further, an organic compound material may be blended therewith.

Since the capability of attenuating light energy generally increases as scattering and/or absorption of light increases, the plate-like member of the biochemical analysis unit preferably has absorbance of 0.3 per cm (thickness) or more and more preferably has absorbance of 1 per cm (thickness) or more. The absorbance can be determined by placing an integrating sphere immediately behind a plate-like member having a thickness of T cm, measuring an amount A of transmitted light at a wavelength of probe light or emission light used for measurement by a spectrophotometer, and calculating A/T. In the present invention, a light scattering substance or a light absorbing substance may be added to the plate-like member of the biochemical analysis unit in order to improve the capability of attenuating light energy. Particles of a material different from a material forming the plate-like member of the biochemical analysis unit may be preferably used as a light scattering substance and a pigment or dye may be preferably used as a light absorbing substance.

Further, since the capability of attenuating radiation energy generally increases as specific gravity increases, the plate-like member of the biochemical analysis unit is preferably formed of a compound material or a composite material having specific gravity of 1.0 g/cm³ or more and more preferably formed of a compound material or a composite material having specific gravity of 1.5 g/cm³ to 23 g/cm³.

The above and other objects and features of the present invention will become apparent from the following description made with reference to the accompanying drawings.

### BRIEF DESCRIPTION OF THE DRAWINGS

Figure 1 is a schematic perspective view showing a biochemical analysis unit which is a preferred embodiment of the present invention.
Figure 2 is a schematic partial cross-sectional view of a biochemical analysis unit.
Figure 3 is a schematic cross sectional view showing a calender processing apparatus for manufacturing a biochemical analysis unit.
Figure 4 is a schematic front view showing a spotting device.
Figure 5 is a schematic front view showing a hybridization reaction vessel.
Figure 6 is a schematic perspective view showing a stimulable phosphor sheet.
Figure 7 is a schematic cross-sectional view showing a method for exposing a number of stimulable phosphor layer regions formed in a stimulable phosphor sheet to a radioactive labeling substance contained in a number of absorptive regions formed in a biochemical analysis unit.
Figure 8 is a schematic view showing one example of a scanner for reading radiation data of a radioactive labeling substance recorded in a number of the stimulable phosphor layer regions formed in the stimulable phosphor sheet and fluorescence data of a fluorescent substance such as a fluorescent dye recorded in a number of the absorptive regions formed in the biochemical analysis unit and producing biochemical analysis data.
Figure 9 is a schematic perspective view showing details in the vicinity of a photomultiplier of a scanner shown in Figure 8.
Figure 10 is a schematic cross-sectional view taken along a line A-A in Figure 9.
Figure 11 is a schematic cross-sectional view taken along a line B-B in Figure 9.
Figure 12 is a schematic cross-sectional view taken along a line C-C in Figure 9.
Figure 13 is a schematic cross-sectional view taken along a line D-D in Figure 9.
Figure 14 is a schematic plan view showing the scanning mechanism of an optical head.
Figure 15 is a block diagram of a control system, an input system, a drive system and a detection system of the scanner shown in Figure 8.
Figure 16 is a schematic front view showing a data producing system for reading chemiluminescence data of a labeling substance which generates chemiluminescent emission when it contacts a chemiluminescent substrate and producing biochemical analysis data.
Figure 17 is a schematic longitudinal cross sectional view showing a cooled CCD camera of a data producing system.
Figure 18 is a schematic vertical cross sectional view showing a dark box of a data producing system.
Figure 19 is a block diagram of a personal computer of a data producing system and peripheral devices thereof.
Figure 20 is a schematic perspective view showing a biochemical analysis unit which is another preferred embodiment of the present invention.
Figure 21 is a schematic partial cross-sectional view showing a biochemical analysis unit which is another preferred embodiment of the present invention.
Figure 22 is a schematic cross sectional view showing a heat press apparatus.
Figure 23 is a schematic cross sectional view showing a method for manufacturing a biochemical analysis unit which is a further preferred embodiment of the present invention.

### DESCRIPTION OF THE PREFERRED EMBODIMENTS

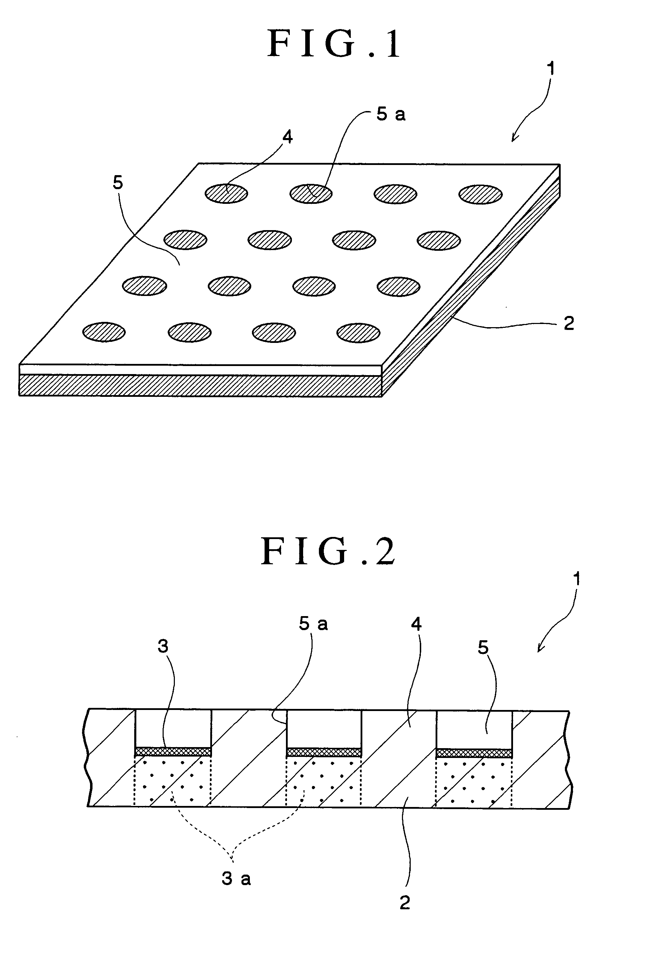

Figure 1 is a schematic perspective view showing a biochemical analysis unit which is a preferred embodiment of the present invention and Figure 2 is a schematic partial cross-sectional view thereof.

As shown in Figures 1 and 2, a biochemical analysis unit 1 includes an absorptive membrane 2 formed of nylon 6 capable of forming a membrane filter and an aluminum substrate 5 formed with a number of substantially circular through-holes 5a in a regular pattern into which the absorptive membrane 2 has been pressed by a calender processing apparatus to form a number of absorptive regions 4 regularly arranged so as to correspond to a number of the through-holes 5a formed in the aluminum substrate 5.

An adhesive agent layer 3 is formed on the reverse surface of the aluminum substrate 5, and the aluminum substrate 5 and the absorptive membrane 2 are firmly bonded via the adhesive agent layer 3, thereby improving the durability of the biochemical analysis unit 1.

A dye having a property of attenuating light energy is added to the adhesive agent layer 3 and the dye permeates the absorptive membrane 2. As a result, light attenuating regions 3a are formed in the absorptive membrane 2 between the neighboring absorptive regions 4 so as to be adjacent to the aluminum substrate 5 in the thickness direction.

Although not accurately shown in Figure 1, in this embodiment, 19,200 substantially circular absorptive regions 4 having a size of about 0.01 mm² are regularly formed in the manner of a matrix of 120 columns x 160 lines in the biochemical analysis unit 1.

As shown in Figure 2, in this embodiment, the biochemical analysis unit 1 is formed by pressing the absorptive membrane 2 into a number of the through-holes 5a formed in the aluminum substrate 5 in such a manner that the surface of each of the absorptive regions 4 and the surface of the aluminum substrate 5 are located at the same height level.

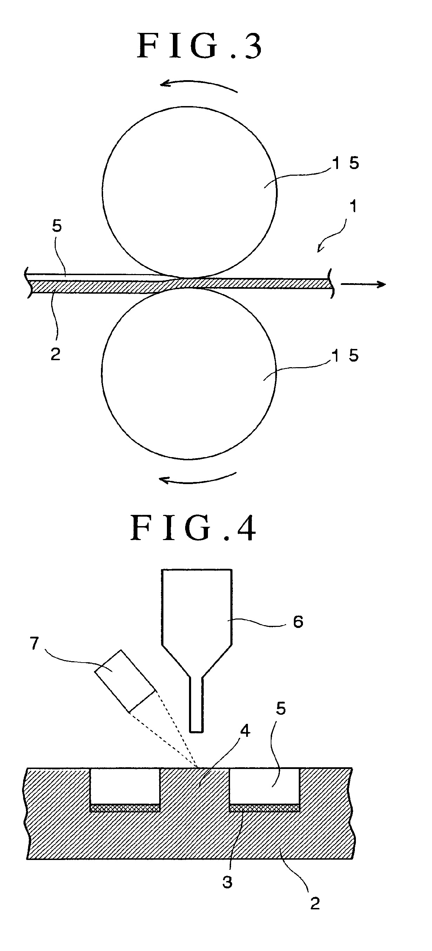

Figure 3 is a schematic cross sectional view showing a calender processing apparatus for manufacturing the biochemical analysis unit 1.

As shown in Figure 3, a calender processing apparatus includes a pair of temperature-controlled calender rolls 15 and when a laminate prepared by superposing the absorptive membrane 2 on the lower surface of the aluminum substrate 5 formed with a number of the through-holes 5a and the adhesive agent layer 3 on the lower surface is fed to a portion between the pair of calender rolls 15, the absorptive membrane 2 is pressed into a number of the through-holes 5a formed in the aluminum substrate 5, thereby producing a biochemical analysis unit 1 formed with a number of the absorptive regions 4 correspondingly to a number of the through-holes 5a regularly formed in the aluminum substrate 5.

Figure 4 is a schematic front view showing a spotting device.

As shown in Figure 4, the spotting device includes an injector 6 for ejecting a solution of specific binding substances toward the surface of the biochemical analysis unit 1 and a CCD camera 7 and is constituted so that the solution of specific binding substances such as cDNAs are spotted from the injector 6 when the tip end portion of the injector 6 and the center of the absorptive region 4 into which the solution containing specific binding substances is to be spotted are determined to coincide with each other as a result of viewing them using the CCD camera, thereby ensuring that the solution of specific binding substances can be accurately spotted into a number of the absorptive regions 4 of the biochemical analysis unit 1.

In this embodiment, since a number of the absorptive regions 4 of the biochemical analysis unit 1 are formed by pressing the absorptive membrane 2 into a number of the through-holes 5a regularly formed in the aluminum substrate 5, cavities in the absorptive membrane 2 have been eliminated by the pressing operation in regions between neighboring absorptive regions 4. Therefore, a solution of specific binding substances spotted in the absorptive regions 4 can be effectively prevented from permeating the absorptive membrane 2 and the specific binding substances spotted in the absorptive regions 4 are absorbed only in the absorptive regions 4.

Then, a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye are selectively hybridized with the specific binding substances thus absorbed in the absorptive regions 4.

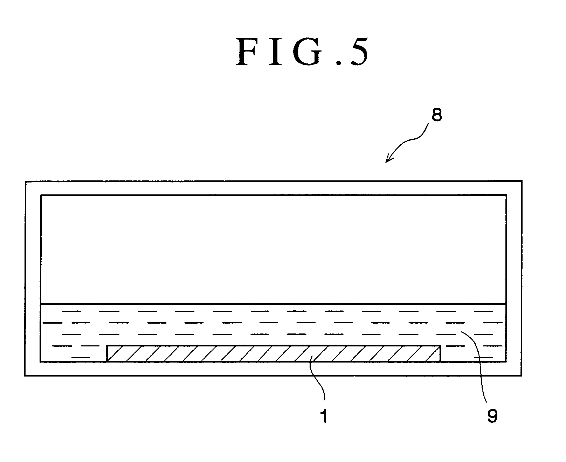

Figure 5 is a schematic longitudinal cross sectional view showing a hybridization reaction vessel.

As shown in Figure 5, a hybridization reaction vessel 8 is formed to have a substantially rectangular cross section and accommodates a hybridization reaction solution 9 containing a substance derived from a living organism labeled with a labeling substance as a probe therein.

In the case where specific binding substances such as cDNA are to be labeled with a radioactive labeling substance, a hybridization reaction solution 9 containing a substance derived from a living organism and labeled with a radioactive labeling substance as a probe is prepared and is accommodated in the hybridization reaction vessel 8.

On the other hand, in the case where specific binding substances such as cDNA are to be labeled with a labeling substance which generates chemiluminescence emission when it contacts a chemiluminescent substrate, a hybridization reaction solution 9 containing a substance derived from a living organism and labeled with a labeling substance which generates chemiluminescence emission when it contacts a chemiluminescent substrate as a probe is prepared and is accommodated in the hybridization reaction vessel 8.

Further, in the case where specific binding substances such as cDNA is are be labeled with a fluorescent substance such as a fluorescent dye, a hybridization reaction solution 9 containing a substance derived from a living organism and labeled with a fluorescent substance such as a fluorescent dye as a probe is prepared and is accommodated in the hybridization reaction vessel 8.

It is possible to prepare a hybridization reaction solution 9 containing two or more substances derived from a living organism among a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye and accommodate it in the hybridization vessel 8. In this embodiment, a hybridization reaction solution 9 containing a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye is prepared and accommodated in the hybridization reaction vessel 8.

When hybridization is to be performed, the biochemical analysis unit 1 containing specific binding substances such as a plurality of cDNAs spotted into a number of absorptive regions 4 is accommodated in the hybridization reaction vessel 8 and vibration is applied to the hybridization reaction vessel 8.

As a result, a substance derived from a living organism, labeled with a radioactive labeling substance and contained in the hybridization reaction solution 9, a substance derived from a living organism, labeled with a labeling substance which generates chemiluminescence emission when it contacts a chemiluminescent substrate and contained in the hybridization reaction solution 9 and a substance derived from a living organism, labeled with a fluorescent substance such as a fluorescent dye and contained in the hybridization reaction solution 9 are brought into contact with specific binding substances absorbed in a number of the absorptive regions 4 of the biochemical analysis unit 1 by convection and diffusion and selectively hybridized with the specific binding substances.

When a substance derived from a living organism and labeled with a radioactive labeling, a substance derived from a living organism and labeled with a labeling substance which generates chemiluminescence emission when it contacts a chemiluminescent substrate and a substance derived from a living organism and labeled with a fluorescent substance such as a fluorescent dye have been selectively hybridized with the specific binding substances absorbed in a number of the absorptive regions 4 of the biochemical analysis unit 1, the hybridization reaction solution 9 is discharged from the hybridization reaction vessel 8 and a cleaning solution is fed into the hybridization reaction vessel 8, thereby cleaning the biochemical analysis unit 1.

In this embodiment, since the biochemical analysis unit 1 is formed by pressing the absorptive membrane 2 formed of nylon-6 into a number of the through-holes 5a formed in the aluminum substrate 5, the biochemical analysis unit 1 does not stretch or shrink even when it is subjected to liquid processing such as hybridization.

In this manner, radiation data of a radioactive labeling substance, chemiluminescence data and fluorescence data of a fluorescent substance such as a fluorescent dye are recorded in a number of absorptive regions 4 formed in the biochemical analysis unit 1. Fluorescence data recorded in a number of absorptive regions 4 formed in the biochemical analysis unit 1 are read by a scanner described later, thereby producing biochemical analysis data and chemiluminescence data recorded in a number of absorptive regions 4 formed in the biochemical analysis unit 1 are read by a data producing system described later, thereby producing biochemical analysis data.

On the other hand, radiation data of the radioactive labeling substance recorded in a number of absorptive regions 4 formed in the biochemical analysis unit 1 are transferred onto a stimulable phosphor sheet and radiation data transferred onto the stimulable phosphor sheet are read by the scanner described later, thereby producing biochemical analysis data.

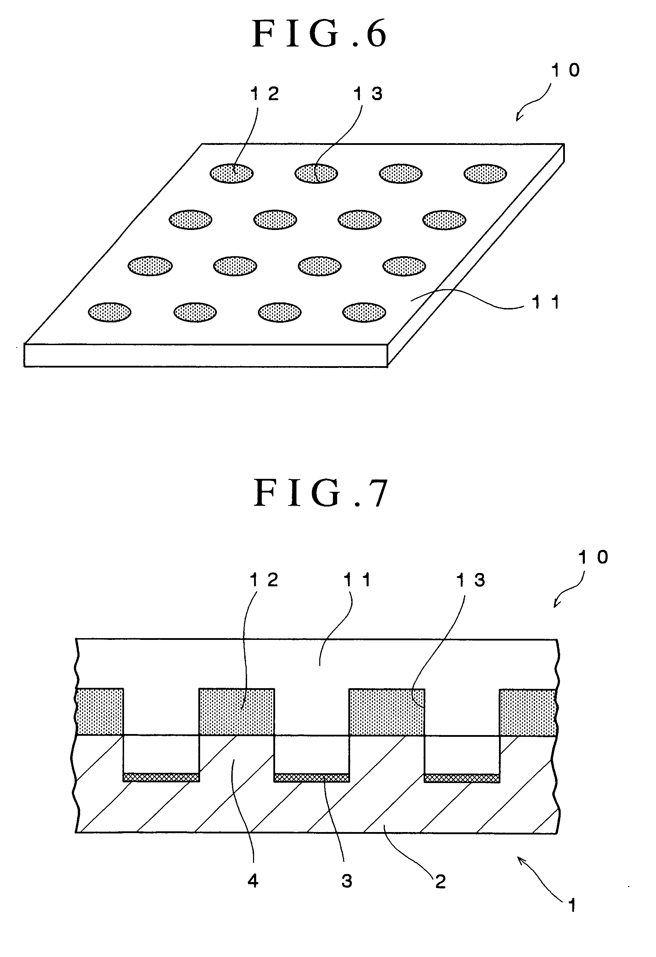

Figure 6 is a schematic perspective view showing a stimulable phosphor sheet.

As shown in Figure 6, a stimulable phosphor sheet 10 according to this embodiment includes a support 11 made of nickel and regularly formed with a number of substantially circular through-holes 13 and a number of stimulable phosphor layer regions 12 are dot-like formed by embedding stimulable phosphor in a number of the through-holes 13 formed in the substrate 11.

A number of the through-holes 13 are formed in the substrate 11 in the same pattern as that of a number of the absorptive regions 4 formed in the biochemical analysis unit 1 and each of a number of the stimulable phosphor layer regions 12 has the same size as that of each of a number of the absorptive regions 4 formed in the biochemical analysis unit 1.

Therefore, although not accurately shown in Figure 6, in this embodiment, substantially circular stimulable phosphor layer regions 12 having a size of about 0.01 mm² are regularly formed in the manner of a matrix of 120 columns x 160 lines in the support 11 and, therefore, 19,200 stimulable phosphor layer regions 12 are dot-like formed.

In this embodiment, stimulable phosphor is embedding in a number of the through-holes 13 formed in the support 11 in such a manner that the surface of the support 11 and the surface of each of the stimulable phosphor layer regions 12 are located at the same height level.

Figure 7 is a schematic cross-sectional view showing a method for exposing a number of the stimulable phosphor layer regions 12 formed in the stimulable phosphor sheet 10 to a radioactive labeling substance contained in a number of the absorptive regions 4 formed in the biochemical analysis unit 1.

As shown in Figure 7, when the stimulable phosphor layer regions 12 of a stimulable phosphor sheet 10 are to be exposed, the stimulable phosphor sheet 10 is superposed on the biochemical analysis unit 1 in such a manner that a number of the absorptive regions 4 formed in the biochemical analysis unit 1 face the corresponding stimulable phosphor layer regions 12 formed in the support 11 of the stimulable phosphor sheet 10.

In this embodiment, since the biochemical analysis unit 1 is formed by pressing the absorptive membrane 2 into a number of the through-holes 3 formed in the aluminum substrate 5, the biochemical analysis unit 1 does not shrink or stretch when it is subjected to liquid processing such as hybridization and, therefore, it is possible to easily and accurately superpose the stimulable phosphor sheet 10 on the biochemical analysis unit 1 so that each of absorptive regions 4 formed in the biochemical analysis unit 1 accurately faces the corresponding stimulable phosphor layer region 12 formed in the support 11 of the stimulable phosphor sheet 10, thereby exposing the dot-like stimulable phosphor layer regions 12.

In this manner, each of a number of the stimulable phosphor layer regions 12 formed in the support 11 of the stimulable phosphor sheet 10 is kept to face the corresponding absorptive region 4 formed in the biochemical analysis unit 1 for a predetermined time period, whereby a number of the stimulable phosphor layer regions 12 formed in the stimulable phosphor sheet 10 are exposed to the radioactive labeling substance selectively contained in a number of the absorptive regions 4 formed in the biochemical analysis unit 1.

During the exposure operation, electron beams (β rays) are released from the radioactive labeling substance absorbed in the absorptive regions 4 of the biochemical analysis unit 1. However, since a number of the absorptive regions 4 are formed by pressing the absorptive membrane 2 into a number of the through-holes 5a formed in the aluminum substrate 5, and the aluminum substrate 5 capable of attenuating radiation energy is present around each of the absorptive regions 4, electron beams (β rays) released from a particular absorptive region 4 of the biochemical analysis unit 1 can be efficiently prevented from scattering, thereby mixing with electron beams (β rays) released from neighboring absorptive regions 4 and entering stimulable phosphor layer regions 12 next the stimulable phosphor layer region 12 corresponding thereto. Further, since a number of the stimulable phosphor layer regions 12 of the stimulable phosphor sheet 10 are formed by embedding stimulable phosphor in a number of the through-holes 13 formed in the support 11 made of nickel and the support 11 is capable of attenuating radiation energy, electron beams (β rays) released from the absorptive regions 4 of the biochemical analysis unit 1 can be efficiently prevented from scattering in the support 11 of the stimulable phosphor sheet 10 and entering stimulable phosphor layer regions 12 next to the corresponding stimulable phosphor layer region 12. Therefore, since it is possible to selectively impinge electron beams (β rays) released from the radioactive labeling substance contained in the individual absorptive regions 4 onto the corresponding stimulable phosphor layer regions 12, it is possible to reliably prevent electron beams (β rays) released from the radioactive labeling substance contained in the individual absorptive regions 4 from entering the stimulable phosphor layer regions 12 of the stimulable phosphor sheet 10 to be exposed to electron beams (β rays) released from neighboring absorptive regions 4 and exposing stimulable phosphor contained therein.

Therefore, stimulable phosphor contained in a number of the stimulable phosphor layer regions 12 formed in the stimulable phosphor sheet 10 can be reliably exposed to only a radioactive labeling substance contained in the corresponding absorptive regions 4 of the biochemical analysis unit 1.

In this manner, radiation data of a radioactive labeling substance are recorded in a number of the stimulable phosphor layer regions 12 formed in the support 11 of the stimulable phosphor sheet 10.

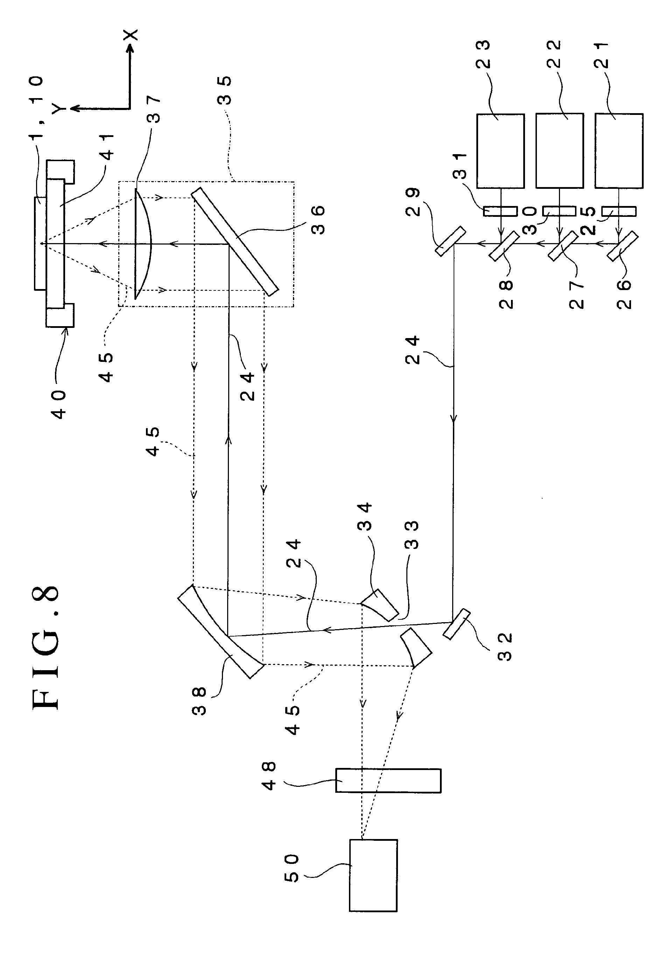

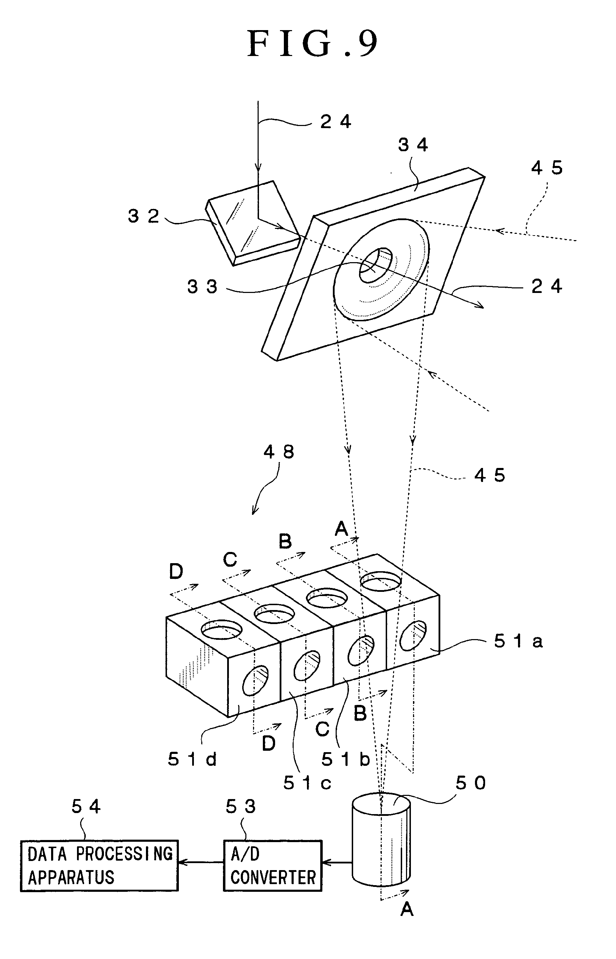

Figure 8 is a schematic view showing one example of a scanner for reading radiation data of a radioactive labeling substance recorded in a number of the stimulable phosphor layer regions 12 formed in the support 11 of the stimulable phosphor sheet 10 and fluorescence data of a fluorescent substance such as a fluorescent dye recorded in a number of the absorptive regions 4 formed in the biochemical analysis unit 1 and producing biochemical analysis data, and Figure 9 is a schematic perspective view showing details in the vicinity of a photomultiplier of the scanner.

The scanner shown in Figure 8 is constituted so as to read radiation data of a radioactive labeling substance recorded in a number of the stimulable phosphor layer regions 12 formed in the support 11 of the stimulable phosphor sheet 10 and fluorescence data of a fluorescent substance such as a fluorescent dye recorded in a number of the absorptive regions 4 of the biochemical analysis unit 1 to produce biochemical analysis data and includes a first laser stimulating ray source 21 for emitting a laser beam having a wavelength of 640 nm, a second laser stimulating ray source 22 for emitting a laser beam having a wavelength of 532 nm and a third laser stimulating ray source 23 for emitting a laser beam having a wavelength of 473 nm.

In this embodiment, the first laser stimulating ray source 21 is constituted by a semiconductor laser beam source and the second laser stimulating ray source 22 and the third laser stimulating ray source 23 are constituted by a second harmonic generation element.

A laser beam 24 emitted from the first laser stimulating source 21 passes through a collimator lens 25, thereby being made a parallel beam, and is reflected by a mirror 26. A first dichroic mirror 27 for transmitting light having a wavelength of 640 nm but reflecting light having a wavelength of 532 nm and a second dichroic mirror 28 for transmitting light having a wavelength equal to and longer than 532 nm but reflecting light having a wavelength of 473 nm are provided in the optical path of the laser beam 24 emitted from the first laser stimulating ray source 21. The laser beam 24 emitted from the first laser stimulating ray source 21 and reflected by the mirror 26 passes through the first dichroic mirror 27 and the second dichroic mirror 28 and advances to a mirror 29.

On the other hand, the laser beam 24 emitted from the second laser stimulating ray source 22 passes through a collimator lens 30, thereby being made a parallel beam, and is reflected by the first dichroic mirror 27, thereby changing its direction by 90 degrees. The laser beam 24 then passes through the second dichroic mirror 28 and advances to the mirror 29.

Further, the laser beam 24 emitted from the third laser stimulating ray source 23 passes through a collimator lens 31, thereby being made a parallel beam, and is reflected by the second dichroic mirror 28, thereby changing its direction by 90 degrees. The laser beam 24 then advances to the mirror 29.

The laser beam 24 advancing to the mirror 29 is reflected by the mirror 29 and advances to a mirror 32 to be reflected thereby.

A perforated mirror 34 formed with a hole 33 at the center portion thereof is provided in the optical path of the laser beam 24 reflected by the mirror 32. The laser beam 24 reflected by the mirror 32 passes through the hole 33 of the perforated mirror 34 and advances to a concave mirror 38.

The laser beam 24 advancing to the concave mirror 38 is reflected by the concave mirror 38 and enters an optical head 35.

The optical head 35 includes a mirror 36 and an aspherical lens 37. The laser beam 24 entering the optical head 35 is reflected by the mirror 36 and impinged by the aspherical lens 37 onto one of the stimulable phosphor layer regions 12 of the stimulable phosphor sheet 10 or one of the absorptive regions 4 of the biochemical analysis unit 1 placed on the glass plate 41 of a stage 40.

When the laser beam 24 impinges on one of the stimulable phosphor layer regions 12 formed in the support 11 of the stimulable phosphor sheet 10, stimulable phosphor contained in the stimulable phosphor layer region 12 is excited, thereby releasing stimulated emission 45. On the other hand, when the laser beam 24 impinges on one of the absorptive regions 4 formed in the biochemical analysis unit 1, a fluorescent substance such as a fluorescent dye contained in the absorptive region 4 is excited, thereby releasing fluorescence emission 45.

The stimulated emission 45 released from the stimulable phosphor layer region 12 formed in the stimulable phosphor 10 or the fluorescence emission 45 released from the absorptive region 4 formed in the biochemical analysis unit 1 is condensed onto the mirror 36 by the aspherical lens 37 provided in the optical head 35 and reflected by the mirror 36 on the side of the optical path of the laser beam 24, thereby being made a parallel beam to advance to the concave mirror 38.

The stimulated emission 45 or the fluorescence emission 45 advancing to the concave mirror 38 is reflected by the concave mirror 38 and advances to the perforated mirror 34.

As shown in Figure 9, the stimulated emission 45 or the fluorescence emission 45 advancing to the perforated mirror 34 is reflected downward by the perforated mirror 34 formed as a concave mirror and advances to a filter unit 48, whereby light having a predetermined wavelength is cut. The stimulated emission 45 or the fluorescence emission 45 then impinges on a photomultiplier 50, thereby being photoelectrically detected.

As shown in Figure 9, the filter unit 48 is provided with four filter members 51a, 51b, 51c and 51d and is constituted to be laterally movable in Figure 9 by a motor (not shown).

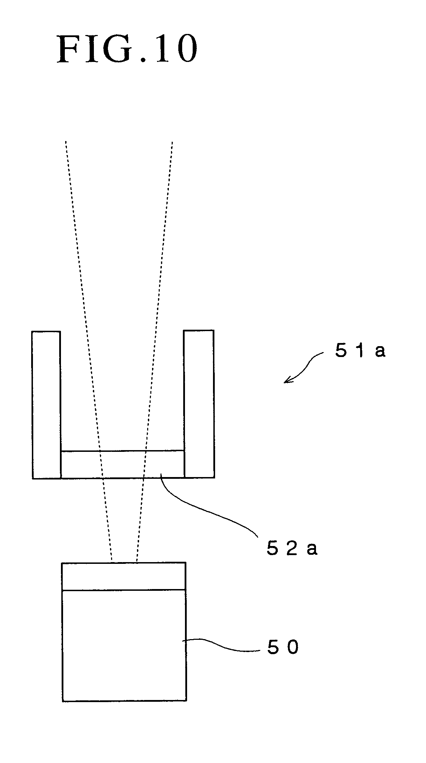

Figure 10 is a schematic cross-sectional view taken along a line A-A in Figure 9.

As shown in Figure 10, the filter member 51a includes a filter 52a and the filter 52a is used for reading fluorescence emission 45 by stimulating a fluorescent substance such as a fluorescent dye contained in a number of the absorptive regions 4 formed in the biochemical analysis unit 1 using the first laser stimulating ray source 21 and has a property of cutting off light having a wavelength of 640 nm but transmitting light having a wavelength longer than 640 nm.

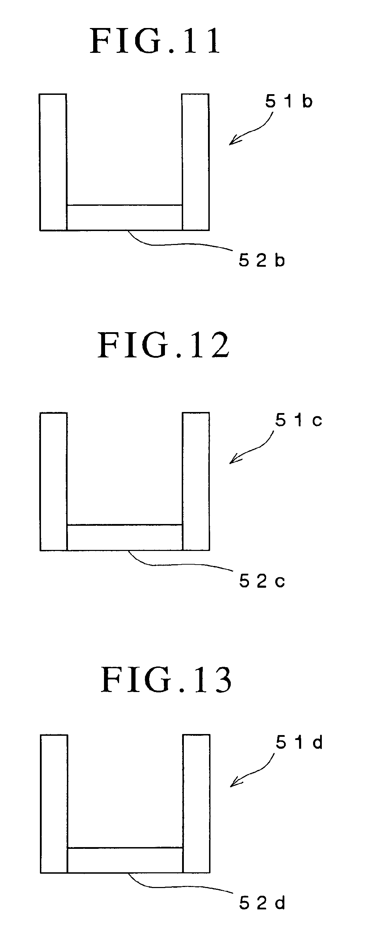

Figure 11 is a schematic cross-sectional view taken along a line B-B in Figure 9.

As shown in Figure 11, the filter member 51b includes a filter 52b and the filter 52b is used for reading fluorescence emission 45 by stimulating a fluorescent substance such as a fluorescent dye contained in a number of the absorptive regions 4 formed in the biochemical analysis unit 1 using the second laser stimulating ray source 22 and has a property of cutting off light having a wavelength of 532 nm but transmitting light having a wavelength longer than 532 nm.

Figure 12 is a schematic cross-sectional view taken along a line C-C in Figure 9.

As shown in Figure 12, the filter member 51c includes a filter 52c and the filter 52c is used for reading fluorescence emission 45 by stimulating a fluorescent substance such as a fluorescent dye contained in a number of the absorptive regions 4 formed in the biochemical analysis unit 1 using the third laser stimulating ray source 23 and has a property of cutting off light having a wavelength of 473 nm but transmitting light having a wavelength longer than 473 nm.

Figure 13 is a schematic cross-sectional view taken along a line D-D in Figure 9.

As shown in Figure 13, the filter member 51d includes a filter 52d and the filter 52d is used for reading stimulated emission 45 released from stimulable phosphor contained in a number of the dot-like stimulable phosphor layer regions 12 formed in the stimulable phosphor sheet 10 upon being stimulated using the first laser stimulating ray source 1 and has a property of transmitting only light having a wavelength corresponding to that of stimulated emission emitted from stimulable phosphor and cutting off light having a wavelength of 640 nm.

Therefore, in accordance with the kind of a stimulating ray source to be used, one of these filter members 51a, 51b, 51c, 51d is selectively positioned in front of the photomultiplier 50, thereby enabling the photomultiplier 50 to photoelectrically detect only light to be detected.

The analog data produced by photoelectrically detecting stimulated emission 45 or fluorescence emission 45 with the photomultiplier 50 are converted by an A/D converter 53 into digital data and the digital data are fed to a data processing apparatus 54.

Although not shown in Figure 8, the optical head 35 is constituted to be movable by a scanning mechanism in a main scanning direction indicated by an arrow X and a sub-scanning direction indicated by an arrow Y in Figure 8 so that all of the dot-like stimulable phosphor layer regions 12 formed in the stimulable phosphor sheet 10 or all of the absorptive regions 4 formed in the biochemical analysis unit 1 can be scanned by the laser beam 24.

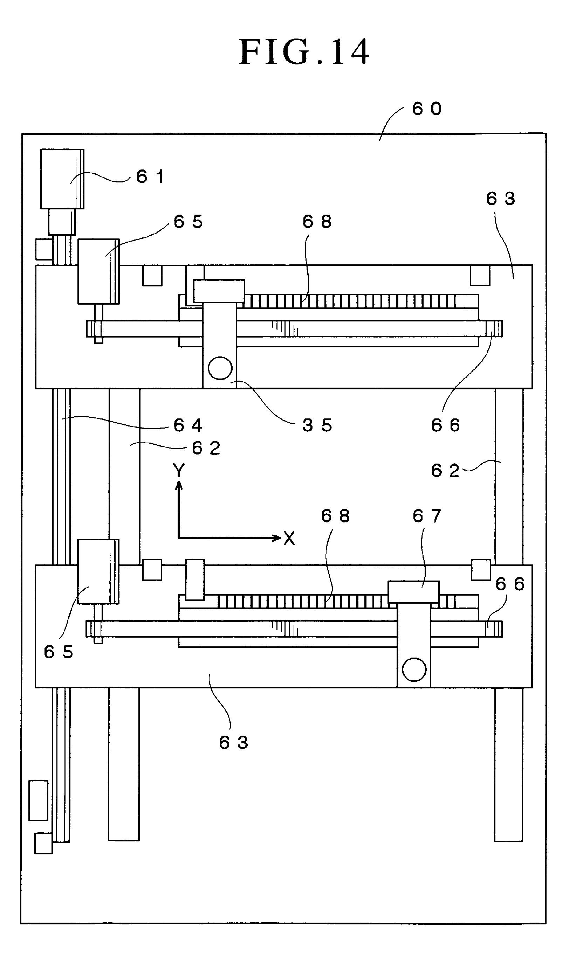

Figure 14 is a schematic plan view showing the scanning mechanism of the optical head 35. In Figure 14, optical systems other than the optical head 35 and the paths of the laser beam 24 and stimulated emission 45 or fluorescence emission 45 are omitted for simplification.

As shown in Figure 14, the scanning mechanism of the optical head 35 includes a base plate 60, and a sub-scanning pulse motor 61 and a pair of rails 62, 62 are fixed on the base plate 60. A movable base plate 63 is further provided so as to be movable in the sub-scanning direction indicated by an arrow Y in Figure 14.

The movable base plate 63 is formed with a threaded hole (not shown) and a threaded rod 64 rotated by the sub-scanning pulse motor 61 is engaged with the inside of the hole.

A main scanning stepping motor 65 is provided on the movable base plate 63. The main scanning stepping motor 65 is adapted for intermittently driving an endless belt 66 by a pitch equal to the distance between neighboring absorptive regions 4 formed in the biochemical analysis unit 1, namely, the distance between neighboring stimulable phosphor layer regions 15 formed in the stimulable phosphor sheet 10. The optical head 35 is fixed to the endless belt 66 and when the endless belt 66 is driven by the main scanning stepping motor 65, the optical head 35 is moved in the main scanning direction indicated by an arrow X in Figure 14.

In Figure 14, the reference numeral 67 designates a linear encoder for detecting the position of the optical head 35 in the main scanning direction and the reference numeral 68 designates slits of the linear encoder 67.

Therefore, when the endless belt 66 is driven in the main scanning direction by the main scanning stepping motor 65 and the scanning of one line is completed, the substrate 63 is intermittently moved in the sub-scanning direction by the sub-scanning pulse motor 61, whereby the optical head 35 is moved in the main scanning direction indicated by the arrow X and the sub-scanning direction indicated by the arrow Y in Figure 14 and all of the stimulable phosphor layer regions 12 formed in the support 11 of the stimulable phosphor sheet 10 or all of the absorptive regions 4 formed in the biochemical analysis unit 1 are scanned with the laser beam 24.

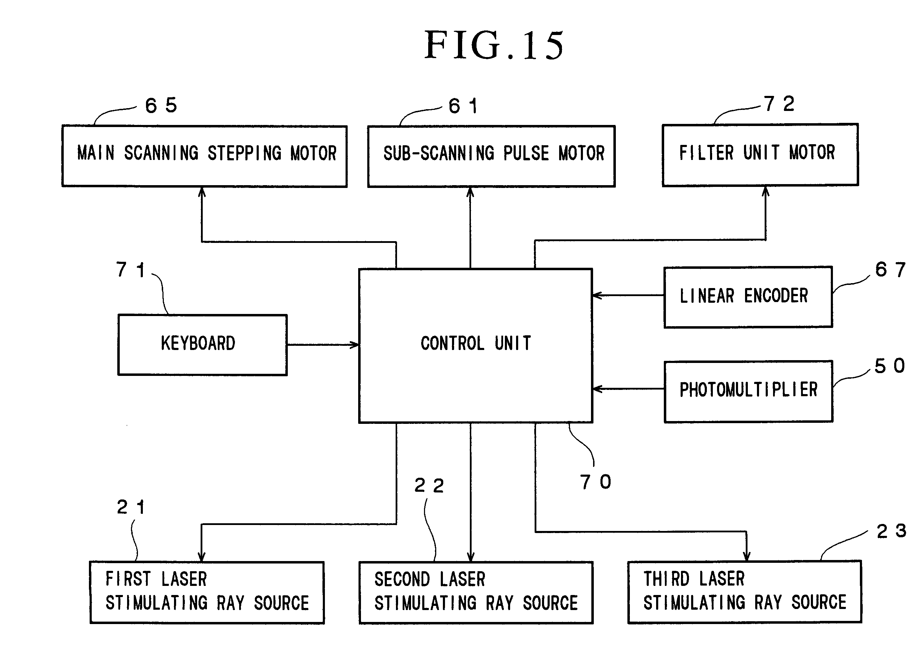

Figure 15 is a block diagram of a control system, an input system, a drive system and a detection system of the scanner shown in Figure 8.

As shown in Figure 15, the control system of the scanner includes a control unit 70 for controlling the overall operation of the scanner and the input system of the scanner includes a keyboard 71 which can be operated by a user and through which various instruction signals can be input.

As shown in Figure 15, the drive system of the scanner includes the main scanning stepping motor 65 for intermittently moving the optical head 35 in the main scanning direction, the sub-scanning pulse motor 61 for moving the optical head 35 in the sub-scanning direction and a filter unit motor 72 for moving the filter unit 48 provided with the four filter members 51a, 51b, 51c and 51d.

The control unit 70 is adapted for selectively outputting a drive signal to the first laser stimulating ray source 21, the second laser stimulating ray source 22 or the third laser stimulating ray source 23 and outputting a drive signal to the filter unit motor 72.

As shown in Figure 15, the detection system of the scanner includes the photomultiplier 50 and the linear encoder 67 for detecting the position of the optical head 35 in the main scanning direction.

In this embodiment, the control unit 70 is adapted to control the on and off operation of the first laser stimulating ray source 21, the second laser stimulating ray source 22 or the third laser stimulating ray source 23 in accordance with a detection signal indicating the position of the optical head 35 input from the linear encoder 67.

The thus constituted scanner reads radiation data of a radioactive labeling substance recorded in a stimulable phosphor sheet 10 by exposing a number of the stimulable phosphor layer regions 12 to a radioactive labeling substance contained in a number of the absorptive regions 4 formed in the biochemical analysis unit 1 and produces biochemical analysis data in the following manner.

A stimulable phosphor sheet 10 is first set on the glass plate 41 of the stage 40 by a user in such a manner that a number of the stimulable phosphor layer regions 12 come into contact with the surface of the glass plate 41.

An instruction signal indicating that a number of the stimulable phosphor regions 12 of the stimulable phosphor sheet 10 are to be scanned with the laser beam 24 is then input through the keyboard 71.

The instruction signal input through the keyboard 71 is input to the control unit 70 and the control unit 70 outputs a drive signal to the filter unit motor 72 in accordance with the instruction signal, thereby moving the filter unit 48 so as to locate the filter member 51d provided with the filter 52d having a property of transmitting only light having a wavelength corresponding to that of stimulated emission emitted from stimulable phosphor but cutting off light having a wavelength of 640 nm in the optical path of stimulated emission 45.

The control unit 70 further outputs a drive signal to the main scanning stepping motor 65 to move the optical head 35 in the main scanning direction and when it determines based on a detection signal indicating the position of the optical head 35 input from the linear encoder 67 that the optical head 35 has reached a position where a laser beam 24 can be projected onto a first stimulable phosphor layer region 15 among a number of the stimulable phosphor layer regions 15 formed in the stimulable phosphor sheet 10, it outputs a drive stop signal to the main scanning stepping motor 65 and a drive signal to the first stimulating ray source 21, thereby actuating it to emit a laser beam 24 having a wavelength of 640 nm.

A laser beam 24 emitted from the first laser stimulating source 21 passes through the collimator lens 25, thereby being made a parallel beam, and is reflected by the mirror 26.

The laser beam 24 reflected by the mirror 26 passes through the first dichroic mirror 27 and the second dichroic mirror 28 and advances to the mirror 29.

The laser beam 24 advancing to the mirror 29 is reflected by the mirror 29 and advances to the mirror 32 to be reflected thereby.

The laser beam 24 reflected by the mirror 32 passes through the hole 33 of the perforated mirror 34 and advances to the concave mirror 38.

The laser beam 24 advancing to the concave mirror 38 is reflected by the concave mirror 38 and enters the optical head 35.

The laser beam 24 entering the optical head 35 is reflected by the mirror 36 and condensed by the aspherical lens 37 onto the first stimulable phosphor layer region 15 of the stimulable phosphor sheet 10 placed on the glass plate 41 of a stage 40.

As a result, stimulable phosphor contained in the first stimulable phosphor layer region 12 formed in the support 11 of the stimulable phosphor sheet 10 is excited by the laser beam 24, thereby releasing stimulated emission 45 from the first stimulable phosphor layer region 12.

In this embodiment, since the stimulable phosphor layer regions 12 are formed by embedding stimulable phosphor in a number of the through-holes 13 formed to be spaced apart from each other in the support 11 made of nickel and the support 11 made of nickel capable of attenuating radiation energy is present between neighboring stimulable phosphor layer regions 12, it is possible to reliably prevent stimulated emission 45 released from stimulable phosphor contained in a particular stimulable phosphor layer region 12 upon being stimulated by the laser beam 24 from advancing to neighboring stimulable phosphor layer regions 12. Therefore, since stimulated emission 45 released from stimulable phosphor contained in a particular stimulable phosphor layer region 12 upon being stimulated by the laser beam 24 can be effectively led to the photomultiplier 50 and detected thereby, it is possible to produce biochemical analysis data having an excellent quantitative characteristic.

The stimulated emission 45 released from the first stimulable phosphor layer region 12 is condensed onto the mirror 36 by the aspherical lens 37 provided in the optical head 35 and reflected by the mirror 36 on the side of the optical path of the laser beam 24, thereby being made a parallel beam to advance to the concave mirror 38.

The stimulated emission 45 advancing to the concave mirror 38 is reflected by the concave mirror 38 and advances to the perforated mirror 34.

As shown in Figure 9, the stimulated emission 45 advancing to the perforated mirror 34 is reflected downward by the perforated mirror 34 formed as a concave mirror and advances to the filter 52d of the filter unit 48.

Since the filter 52d has a property of transmitting only light having a wavelength corresponding to that of stimulated emission emitted from stimulable phosphor and cutting off light having a wavelength of 640 nm, light having a wavelength of 640 nm corresponding to that of the stimulating ray is cut off by the filter 52d and only light having a wavelength corresponding to that of stimulated emission passes through the filter 52d to be photoelectrically detected by the photomultiplier 50.

Analog data produced by photoelectrically detecting stimulated emission 45 with the photomultiplier 50 are converted by an A/D converter 53 into digital data and the digital data are fed to a data processing apparatus 54.

When a predetermined time, for example, several microseconds, has passed after the first stimulating ray source 21 was turned on, the control unit 70 outputs a drive stop signal to the first stimulating ray source 21, thereby turning it off and outputs a drive signal to the main scanning stepping motor 65, thereby moving the optical head 35 by one pitch equal to the distance between neighboring stimulable phosphor layer regions 12 formed in the support 11 of the stimulable phosphor sheet 10.

When the control unit 70 determines based on a detection signal indicating the position of the optical head 35 input from the linear encoder 67 that the optical head 35 has been moved by one pitch equal to the distance between neighboring stimulable phosphor layer regions 12 and has reached a position where a laser beam 24 can be projected onto a second stimulable phosphor layer region 12 next to the first stimulable phosphor layer region 12 formed in the support 11 of the stimulable phosphor sheet 10, it outputs a drive signal to the first stimulating ray source 21 to turn it on, thereby causing the laser beam 24 to excite stimulable phosphor contained in the second stimulable phosphor layer region 12 formed in the stimulable phosphor sheet 10 next to the first stimulable phosphor layer region 12.

Similarly to the above, the second stimulable phosphor layer region 12 formed in the stimulable phosphor sheet 10 is irradiated with the laser beam 24 for a predetermined time, whereby stimulable phosphor contained in the second stimulable phosphor layer region 12 is excited and when stimulated emission 45 released from the second stimulable phosphor layer region 12 is photoelectrically detected by the photomultiplier 50 and analog data are produced, the control unit 70 outputs a drive stop signal to the first stimulating ray source 21, thereby turning it off and outputs a drive signal to the main scanning stepping motor 65, thereby moving the optical head 35 by one pitch equal to the distance between neighboring stimulable phosphor layer regions 12.

In this manner, the on and off operation of the first stimulating ray source 21 is repeated in synchronism with the intermittent movement of the optical head 35 and when the control unit 70 determines based on a detection signal indicating the position of the optical head 35 input from the linear encoder 67 that the optical head 35 has been moved by one scanning line in the main scanning direction and that the stimulable phosphor layer regions 12 included in a first line of the stimulable phosphor layer regions 12 formed in the stimulable phosphor sheet 10 have been scanned with the laser beam 24, it outputs a drive signal to the main scanning stepping motor 65, thereby returning the optical head 35 to its original position and outputs a drive signal to the sub-scanning pulse motor 61, thereby causing it to move the movable base plate 63 by one scanning line in the sub-scanning direction.

When the control unit 70 determines based on a detection signal indicating the position of the optical head 35 input from the linear encoder 67 that the optical head 35 has been returned to its original position and determines that the movable base plate 63 has been moved by one scanning line in the sub-scanning direction, similarly to the manner in which the stimulable phosphor layer regions 12 included in the first line of the stimulable phosphor layer regions 12 formed in the stimulable phosphor sheet 10 were sequentially irradiated with the laser beam 24 emitted from the first laser stimulating ray source 21, the stimulable phosphor layer regions 12 included in a second line of the stimulable phosphor layer regions 12 formed in the stimulable phosphor sheet 10 are sequentially irradiated with the laser beam 24 emitted from the first laser stimulating ray source 21, thereby exciting stimulable phosphor contained in the stimulable phosphor layer regions 12 included in the second line and stimulated emission 45 released from the stimulable phosphor layer regions 12 is sequentially and photoelectrically detected by the photomultiplier 50.

Analog data produced by photoelectrically detecting stimulated emission 45 with the photomultiplier 50 are converted by an A/D converter 53 into digital data and the digital data are fed to a data processing apparatus 54.

When all of the stimulable phosphor layer regions 12 formed in the support 11 of the stimulable phosphor sheet 10 have been scanned with the laser beam 24 to excite stimulable phosphor contained in the stimulable phosphor layer regions 12 and digital data produced by photoelectrically detecting stimulated emission 45 released from the stimulable phosphor layer regions 15 by the photomultiplier 50 to produce analog data and digitizing the analog data by the A/D converter 53 have been forwarded to the data processing apparatus 54, the control unit 70 outputs a drive stop signal to the first laser stimulating ray source 21, thereby turning it off.

As described above, radiation data recorded in a number of the stimulable phosphor layer regions 12 of the stimulable phosphor sheet 10 are read by the scanner to produce biochemical analysis data.

On the other hand, when fluorescence data of a fluorescent substance recorded in a number of the absorptive regions 4 formed in the biochemical analysis unit 1 are to be read to produce biochemical analysis data, the biochemical analysis unit 1 is first set by the user on the glass plate 41 of the stage 40.

A fluorescent substance identification signal for identifying the kind of a fluorescent substance used as a labeling substance and a reading instruction signal indicating that fluorescence data are to be read are then input by the user through the keyboard 71.

The fluorescent substance identification signal and the instruction signal input through the keyboard 71 are input to the control unit 70 and when the control unit 70 receives them, it determines the laser stimulating ray source to be used in accordance with a table stored in a memory (not shown) and also determines what filter is to be positioned in the optical path of fluorescence emission 45 among the filters 52a, 52b and 52c.

For example, when Rhodamine (registered trademark), which can be most efficiently stimulated by a laser beam having a wavelength of 532 nm, is used as a fluorescent substance for labeling a substance derived from a living organism and the fluorescent substance identification signal indicating such a fact is input, the control unit 70 selects the second laser stimulating ray source 22 and the filter 52b and outputs a drive signal to the filter unit motor 72, thereby moving the filter unit 48 so that the filter member 51b inserting the filter 52b having a property of cutting off light having a wavelength of 532 nm but transmitting light having a wavelength longer than 532 nm in the optical path of the fluorescence emission 45.

The control unit 70 further outputs a drive signal to the main scanning stepping motor 65 to move the optical head 35 in the main scanning direction and when it determines based on a detection signal indicating the position of the optical head 35 input from the linear encoder 67 that the optical head 35 has reached a position where a laser beam 24 can be projected onto a first absorptive region 4 among a number of the absorptive regions 4 formed in the biochemical analysis unit 1, it outputs a drive stop signal to the main scanning stepping motor 65 and a drive signal to the second laser stimulating ray source 22, thereby actuating it to emit a laser beam 24 having a wavelength of 532 nm.

The laser beam 24 emitted from the second laser stimulating ray source 22 is made a parallel beam by the collimator lens 30, advances to the first dichroic mirror 27 and is reflected thereby.

The laser beam 24 reflected by the first dichroic mirror 27 transmits through the second dichroic mirror 28 and advances to the mirror 29.

The laser beam 24 advancing to the mirror 29 is reflected by the mirror 29 and further advances to the mirror 32 to be reflected thereby.

The laser beam 24 reflected by the mirror 32 advances to the perforated mirror 34 and passes through the hole 33 of the perforated mirror 34. Then, the laser beam 24 advances to the concave mirror 38.

The laser beam 24 advancing to the concave mirror 38 is reflected thereby and enters the optical head 35.

The laser beam 24 entering the optical head 35 is reflected by the mirror 36 and condensed by the aspherical lens 37 onto the first absorptive region 4 of the biochemical analysis unit 1 placed on the glass plate 41 of the stage 40.

As a result, a fluorescent substance such as a fluorescent dye, for instance, Rhodamine, contained in the absorptive region 4 formed in the biochemical analysis unit 1 is stimulated by the laser beam 24 and fluorescence emission 45 is released from Rhodamine.

In this embodiment, a number of the absorptive regions 4 of the biochemical analysis unit 1 are formed by pressing the absorptive membrane 2 into a number of the through-holes 3 formed in the aluminum substrate 5, and the aluminum substrate 5 having a property of attenuating light energy is present around each of the absorptive regions 4. Further, the light attenuating regions 3a are formed by the dye having a property of attenuating light energy and permeating the absorptive membrane 2 from the adhesive agent layer 3 in the absorptive membrane 2 between the neighboring absorptive regions 4 so as to be adjacent to the aluminum substrate 5 in a thickness direction. Therefore, since it is possible to reliably prevent fluorescence emission 45 generated by exciting a fluorescent substance such as a fluorescent dye contained in each of the absorptive regions 4 with the laser beam 24 and released from each of the absorptive regions 4 from advancing to neighboring absorptive regions 4, it is possible effectively lead fluorescence emission 45 generated by exciting a fluorescent substance such as a fluorescent dye contained in each of the absorptive regions 4 with the laser beam 24 and released from each of the absorptive regions 4 to the photomultiplier 50 and detect it.

The fluorescence emission 45 released from Rhodamine is condensed by the aspherical lens 37 provided in the optical head 35 and reflected by the mirror 36 on the side of an optical path of the laser beam 24, thereby being made a parallel beam to advance to the concave mirror 38.

The fluorescence emission 45 advancing to the concave mirror 38 is reflected by the concave mirror 38 and advances to the perforated mirror 34.

As shown in Figure 9, the fluorescence emission 45 advancing to the perforated mirror 34 is reflected downward by the perforated mirror 34 formed as a concave mirror and advances to the filter 52b of a filter unit 48.

Since the filter 52b has a property of cutting off light having a wavelength of 532 nm but transmitting light having a wavelength longer than 532 nm, light having the same wavelength of 532 nm as that of the stimulating ray is cut off by the filter 52b and only light in the wavelength of the fluorescence emission 45 released from Rhodamine passes through the filter 52b to be photoelectrically detected by the photomultiplier 50.

Analog data produced by photoelectrically detecting fluorescence emission 45 with the photomultiplier 50 are converted by an A/D converter 53 into digital data and the digital data are fed to a data processing apparatus 54.

When a predetermined time, for example, several microseconds, has passed after the second laser stimulating ray source 22 was turned on, the control unit 70 outputs a drive stop signal to the second laser stimulating ray source 22, thereby turning it off and outputs a drive signal to the main scanning stepping motor 65, thereby moving the optical head 35 by one pitch equal to the distance between neighboring absorptive regions 4 formed in the biochemical analysis unit 1.

When the control unit 70 determines based on a detection signal indicating the position of the optical head 35 input from the linear encoder 67 that the optical head 35 has been moved by one pitch equal to the distance between neighboring absorptive regions 4 formed in the biochemical analysis unit 1 and has reached a position where a laser beam 24 can be projected onto a second absorptive region 4 next to the first absorptive region 4 formed in the biochemical analysis unit 1, it outputs a drive signal to the second laser stimulating ray source 22 to turn it on, thereby causing the laser beam 24 to excite a fluorescent substance, for example, Rhodamine, contained in the second absorptive region 4 formed in the biochemical analysis unit 1 next to the first absorptive region 4.

Similarly to the above, the second absorptive region 4 formed in the biochemical analysis unit 1 is irradiated with the laser beam 24 for a predetermined time and when fluorescence emission 45 released from the second absorptive region 4 is photoelectrically detected by the photomultiplier 50 and analog data are produced, the control unit 70 outputs a drive stop signal to the second laser stimulating ray source 21, thereby turning it off and outputs a drive signal to the main scanning stepping motor 65, thereby moving the optical head 35 by one pitch equal to the distance between neighboring absorptive regions 4 formed in the biochemical analysis unit 1.

In this manner, the on and off operation of the second laser stimulating ray source 22 is repeated in synchronism with the intermittent movement of the optical head 35 and when the control unit 70 determines based on a detection signal indicating the position of the optical head 35 input from the linear encoder 67 that the optical head 35 has been moved by one scanning line in the main scanning direction and that the absorptive regions 4 included in a first line of the absorptive regions 4 formed in the biochemical analysis unit 1 have been scanned with the laser beam 24, it outputs a drive signal to the main scanning stepping motor 65, thereby returning the optical head 35 to its original position and outputs a drive signal to the sub-scanning pulse motor 61, thereby causing it to move the movable base plate 63 by one scanning line in the sub-scanning direction.

When the control unit 70 determines based on a detection signal indicating the position of the optical head 35 input from the linear encoder 67 that the optical head 35 has been returned to its original position and determines that the movable base plate 63 has been moved by one scanning line in the sub-scanning direction, similarly to the manner in which the absorptive regions 4 included in the first line of the absorptive regions 4 formed in the biochemical analysis unit 1 were sequentially irradiated with the laser beam 24 emitted from the second laser stimulating ray source 22, the absorptive regions 4 included in a second line of the absorptive regions 4 formed in the biochemical analysis unit 1 are sequentially irradiated with the laser beam 24 emitted from the second laser stimulating ray source 22, thereby exciting Rhodamine contained in the absorptive regions 4 included in the second line and fluorescence emission 45 released from the absorptive regions 4 included in the second line is sequentially and photoelectrically detected by the photomultiplier 50.

Analog data produced by photoelectrically detecting fluorescence emission 45 with the photomultiplier 50 are converted by an A/D converter 53 into digital data and the digital data are fed to a data processing apparatus 54.

When all of the absorptive regions 4 formed in the biochemical analysis unit 1 have been scanned with the laser beam 24 to excite Rhodamine contained in the absorptive regions 4 formed in the biochemical analysis unit 1 and digital data produced by photoelectrically detecting fluorescence emission 45 released from the absorptive regions 4 by the photomultiplier 50 to produce analog data and digitizing the analog data by the A/D converter 53 have been forwarded to the data processing apparatus 54, the control unit 70 outputs a drive stop signal to the second laser stimulating ray source 22, thereby turning it off.

As described above, fluorescence data recorded in a number of the absorptive regions 4 of the biochemical analysis unit 1 are read by the scanner to produce biochemical analysis data.

On the other hand, chemiluminescence data recorded in a number of the absorptive regions 4 of the biochemical analysis unit 1 are read by a data producing system including a cooled CCD camera to produce biochemical analysis data.

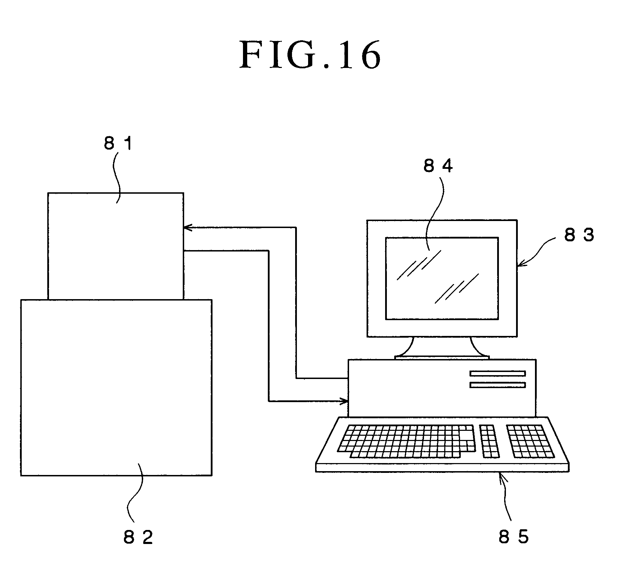

Figure 16 is a schematic front view showing a data producing system for reading chemiluminescence data of a labeling substance recorded in absorptive regions formed in the biochemical analysis unit 1, which generates chemiluminescent emission when it contacts a chemiluminescent substrate and producing biochemical analysis data.

The data producing system shown in Figure 16 is constituted to be able to also read fluorescence data of a fluorescent substance such as a fluorescent dye recorded in a number of the absorptive regions 4 in the biochemical analysis unit 1.

As shown in Figure 16, the data producing system includes a cooled CCD camera 81, a dark box 82 and a personal computer 83. As shown in Figure 14, the personal computer 83 is equipped with a CRT 84 and a keyboard 85.

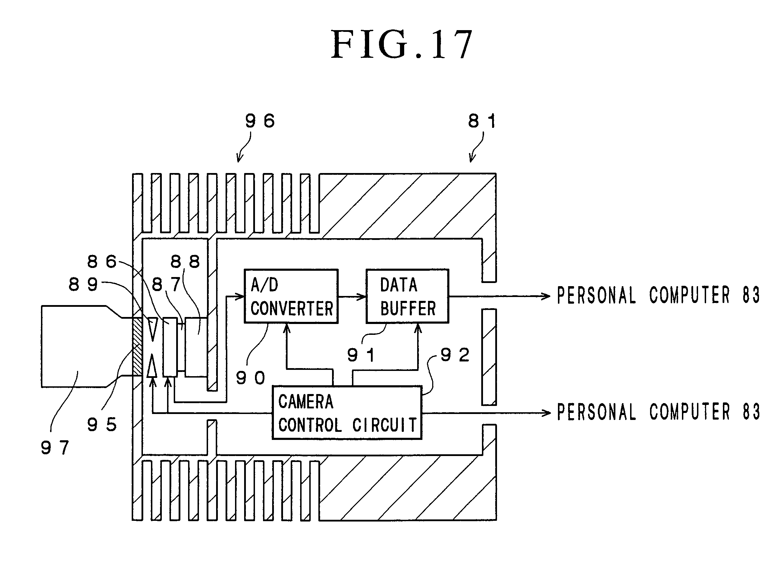

Figure 17 is a schematic longitudinal cross sectional view showing the cooled CCD camera 81 of the data producing system.

As shown in Figure 17, the cooled CCD camera 81 includes a CCD 86, a heat transfer plate 87 made of metal such as aluminum, a Peltier element 88 for cooling the CCD 86, a shutter 89 disposed in front of the CCD 86, an A/D converter 90 for converting analog data produced by the CCD 86 to digital data, a data buffer 91 for temporarily storing the data digitized by the A/D converter 90, and a camera control circuit 92 for controlling the operation of the cooled CCD camera 81. An opening formed between the dark box 82 and the cooled CCD camera 81 is closed by a glass plate 95 and the periphery of the cooled CCD camera 81 is formed with heat dispersion fins 96 over substantially its entire length for dispersing heat.

A camera lens 97 disposed in the dark box 82 is mounted on the front surface of the glass plate 95 disposed in the cooled CCD camera 81.

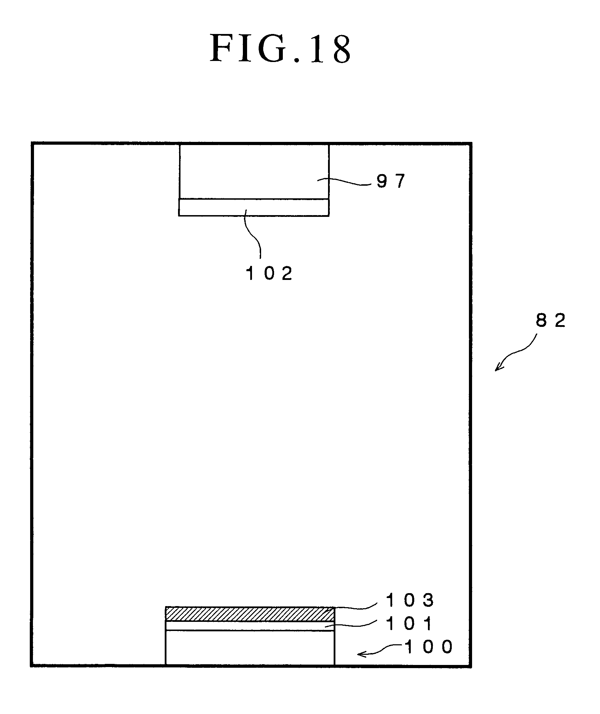

Figure 18 is a schematic vertical cross sectional view showing the dark box 82 of the data producing system.

As shown in Figure 18, the dark box 82 is equipped with a light emitting diode stimulating ray source 100 for emitting a stimulating ray. The light emitting diode stimulating ray source 100 is provided with a filter 101 detachably mounted thereon and a diffusion plate 103 mounted on the upper surface of the filter 101. The stimulating ray is emitted via the diffusion plate 103 toward a biochemical analysis unit (not shown) placed on the diffusion plate 103 so as to ensure that the biochemical analysis unit can be uniformly irradiated with the stimulating ray. The filter 101 has a property of cutting light components having a wavelength not close to that of the stimulating ray and harmful to the stimulation of a fluorescent substance and transmitting through only light components having a wavelength in the vicinity of that of the stimulating ray. A filter 102 for cutting light components having a wavelength in the vicinity of that of the stimulating ray is detachably provided on the front surface of the camera lens 97.

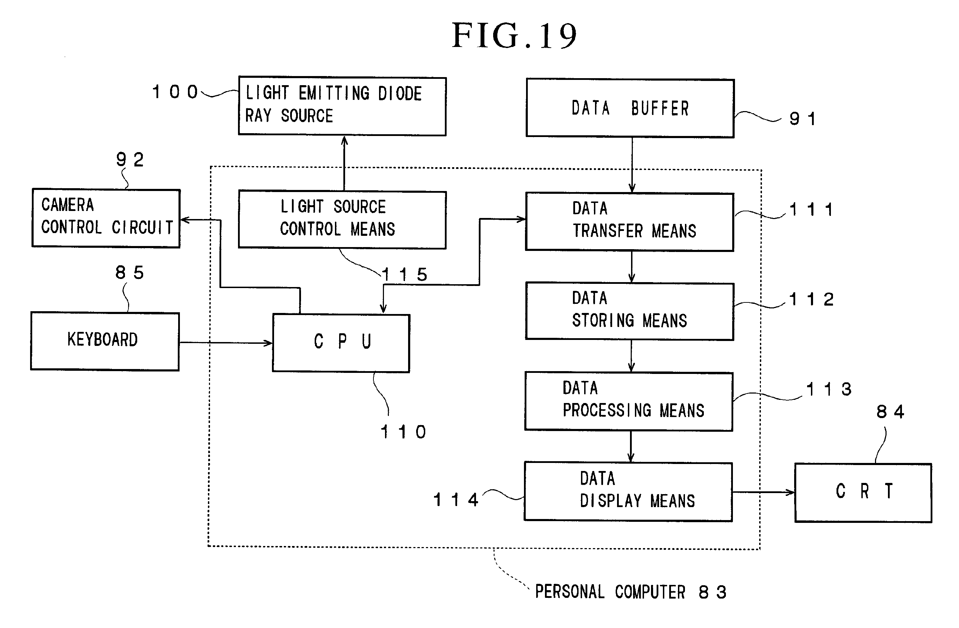

Figure 19 is a block diagram of the personal computer 83 of the data producing system and peripheral devices thereof.

As shown in Figure 19, the personal computer 83 includes a CPU 110 for controlling the exposure of the cooled CCD camera 81, a data transferring means 111 for reading the data produced by the cooled CCD camera 81 from the data buffer 91, a storing means 112 for storing data, a data processing means 113 for effecting data processing on the digital data stored in the data storing means 112, and a data displaying means 114 for displaying visual data on the screen of the CRT 84 based on the digital data stored in the data storing means 112.

The light emitting diode stimulating ray source 100 is controlled by a light source control means 115 and an instruction signal can be input via the CPU 110 to the light source control means 115 through the keyboard 85. The CPU 110 is constituted so as to output various signals to the camera controlling circuit 92 of the cooled CCD camera 81.

The data producing system shown in Figures 16 to 19 is constituted so as to detect chemiluminescent emission generated by the contact of a labeling substance contained in a number of the absorptive regions 4 formed in the biochemical analysis unit 1 and a chemiluminescent substrate, with the CCD 86 of the cooled CCD camera 81 through a camera lens 97, thereby reading chemiluminescence data to produce biochemical analysis data, and irradiate the biochemical analysis unit 1 with a stimulating ray emitted from the light emitting diode stimulating ray source 100 and detect fluorescence emission released from a fluorescent substance such as a fluorescent dye contained in a number of the absorptive regions 4 formed in the biochemical analysis unit 1 upon being stimulated, with the CCD 86 of the cooled CCD camera 81 through a camera lens 97, thereby reading fluorescence data to produce biochemical analysis data.

When biochemical analysis data are to be produced by reading chemiluminescence data, the filter 102 is removed and while the light emitting diode stimulating ray source 100 is kept off, the biochemical analysis unit 1 is placed on the diffusion plate 103, which is releasing chemiluminescent emission as a result of contact of a labeling substance contained in a number of the absorptive regions 4 formed in the biochemical analysis unit 1 and a chemiluminescent substrate.

The lens focus is then adjusted by the user using the camera lens 97 and the dark box 92 is closed.

When an exposure start signal is input by the user through the keyboard 85, the exposure start signal is input through the CPU 110 to the camera control circuit 92 of the cooled CCD camera 81 so that the shutter 88 is opened by the camera control circuit 92, whereby the exposure of the CCD 86 is started.

Chemiluminescent emission released from a number of the absorptive regions 4 of the biochemical analysis unit 1 impinges on the light receiving surface of the CCD 86 of the cooled CCD camera 81 via the camera lens 97, thereby forming an image on the light receiving surface. The CCD 86 receives light of the thus formed image and accumulates it in the form of electric charges therein.

In this embodiment, a number of the absorptive regions 4 of the biochemical analysis unit 1 are formed by pressing the absorptive membrane 2 into a number of the through-holes 3 formed in the aluminum substrate 5, and the aluminum substrate 5 having a property of attenuating light energy is present around each of the absorptive regions 4. Further, the light attenuating regions 3a are formed by the dye having a property of attenuating light energy and permeating the absorptive membrane 2 from the adhesive agent layer 3 in the absorptive membrane 2 between the neighboring absorptive regions 4 so as to be adjacent to the aluminum substrate 5 in the thickness direction. Therefore, it is possible to reliably prevent chemiluminescence emission released from the labeling substance which generates chemiluminescence emission when it contacts a chemiluminescent substrate and is contained in each of the absorptive regions 4 from being scattered in the absorptive membrane 2 and mixing with chemiluminescence emission released from the labeling substance which generates chemiluminescence emission when it contacts a chemiluminescent substrate and is contained in neighboring absorptive regions 4.

When a predetermined exposure time has passed, the CPU 110 outputs an exposure completion signal to the camera control circuit 92 of the cooled CCD camera 81.

When the camera controlling circuit 92 receives the exposure completion signal from the CPU 110, it transfers analog data accumulated in the CCD 86 in the form of electric charge to the A/D converter 90 to cause the A/D converter 90 to digitize the data and to temporarily store the thus digitized data in the data buffer 91.

At the same time, the CPU 110 outputs a data transfer signal to the data transferring means 111 to cause it to read out the digital data from the data buffer 91 of the cooled CCD camera 81 and to input them to the data storing means 112.

When the user inputs a data displaying signal through the keyboard 85, the CPU 110 outputs the digital data stored in the data storing means 112 to the data processing means 113 and causes the data processing means 113 to effect data processing on the digital data in accordance with the user's instructions. The CPU 110 then outputs a data display signal to the displaying means 115 and causes the displaying means 115 to display biochemical analysis data on the screen of the CRT 84 based on the thus processed digital data.

On the other hand, when biochemical analysis data are to be produced by reading fluorescence data, the biochemical analysis unit 1 is first placed on the diffusion plate 103.

The light emitting diode stimulating ray source 100 is then turned on by the user and the lens focus is adjusted using the camera lens 97. The dark box 92 is then closed.

When the user inputs an exposure start signal through the keyboard 85, the light emitting diode stimulating ray source 100 is again turned on by the light source control means 115, thereby emitting a stimulating ray toward the biochemical analysis unit 1. At the same time, the exposure start signal is input via the CPU 110 to the camera control circuit 92 of the cooled CCD camera 81 and the shutter 89 is opened by the camera control circuit 92, whereby the exposure of the CCD 86 is started.

The stimulating ray emitted from the light emitting diode stimulating ray source 100 passes through the filter 101, whereby light components of wavelengths not in the vicinity of that of the stimulating ray are cut. The stimulating ray then passes through the diffusion plate 103 to be made uniform light and the biochemical analysis unit 1 is irradiated with the uniform stimulating ray.

When the biochemical analysis unit 1 is irradiated with the stimulating ray, a fluorescent substance contained in a number of the absorptive regions 4 formed in the biochemical analysis unit 1 is stimulated by the stimulating ray, thereby releasing fluorescence emission from a number of the absorptive regions 4 of the biochemical analysis unit 1.

The fluorescence emission released from a number of the absorptive regions 4 of the biochemical analysis unit 1 impinges on the light receiving surface of the CCD 86 of the cooled CCD camera 81 through the filter 102 and the camera lens 97 and forms an image thereon. The CCD 86 receives light of the thus formed image and accumulates it in the form of electric charges therein. Since light components of wavelength equal to the stimulating ray wavelength are cut by the filter 102, only fluorescence emission released from the fluorescent substance such as a fluorescent dye contained in a number of the absorptive regions 4 of the biochemical analysis unit 1 is received by the CCD 86.

In this embodiment, a number of the absorptive regions 4 of the biochemical analysis unit 1 are formed by pressing the absorptive membrane 2 into a number of the through-holes 3 formed in the aluminum substrate 5, and the aluminum substrate 5 having a property of attenuating light energy is present around each of the absorptive regions 4. Further, the light attenuating regions 3a are formed by the dye having a property of attenuating light energy and permeating the absorptive membrane 2 from the adhesive agent layer 3 in the absorptive membrane 2 between the neighboring absorptive regions 4 so as to be adjacent to the aluminum substrate 5 in the thickness direction. Therefore, it is possible to reliably prevent fluorescence emission released from a fluorescent substance such as a fluorescent dye contained in each of the absorptive regions 4 upon being excited by the stimulating ray from mixing with fluorescence emission released from neighboring absorptive regions 4.

When a predetermined exposure time has passed, the CPU 110 outputs an exposure completion signal to the camera control circuit 92 of the cooled CCD camera 81.

When the camera controlling circuit 92 receives the exposure completion signal from the CPU 110, it transfers analog data accumulated in the CCD 86 in the form of electric charge to the A/D converter 90 to cause the A/D converter 90 to digitize the data and to temporarily store the thus digitized data in the data buffer 91.

At the same time, the CPU 110 outputs a data transfer signal to the data transferring means 111 to cause it to read out the digital data from the data buffer 91 of the cooled CCD camera 81 and to input them to the data storing means 112.

When the user inputs a data display signal through the keyboard 85, the CPU 110 outputs the digital data stored in the data storing means 112 to the data processing apparatus 113 and causes the data processing apparatus 113 to effect data processing on the digital data in accordance with the user's instructions. The CPU 110 then outputs a data display signal to the displaying means 115 and causes the displaying means 115 to display biochemical analysis data on the screen of the CRT 84 based on the thus processed digital data.

According to this embodiment, a number of the absorptive regions 4 of the biochemical analysis unit 1 are formed by pressing the absorptive membrane 2 into a number of the through-holes 3 formed in the aluminum substrate 5 having a property of attenuating light energy and the aluminum substrate 5 having a property of attenuating light energy is present around each of the absorptive regions 4. Further, the light attenuating regions 3a are formed by the dye having a property of attenuating light energy and permeating the absorptive membrane 2 from the adhesive agent layer 3 in the absorptive membrane 2 between the neighboring absorptive regions 4 so as to be adjacent to the aluminum substrate 5 in the thickness direction. Therefore, in the case of reading fluorescence data recorded in a number of the absorptive regions 4 of the biochemical analysis unit 1 using the scanner shown in Figures 8 to 15 to produce biochemical analysis data, since it is possible to reliably prevent fluorescence emission 45 released from a fluorescent substance such as a fluorescent dye contained in each of the absorptive regions 4 upon being excited by the laser beam 24 from advancing to neighboring absorptive regions 4, it is possible to effectively lead fluorescence emission 45 released from a fluorescent substance such as a fluorescent dye contained in each of the absorptive regions 4 upon being excited by the laser beam 24 to the photomultiplier 50 and detect it. Accordingly, it is possible to reliably prevent noise caused by the scattering of fluorescence emission 45 released from a fluorescent substance in the absorptive membrane 2 from being generated in biochemical analysis data produced by photoelectrically detecting fluorescence emission 45 released from a fluorescent substance and to produce biochemical analysis data having an excellent quantitative characteristic.

Further, according to this embodiment, a number of the absorptive regions 4 of the biochemical analysis unit 1 are formed by pressing the absorptive membrane 2 into a number of the through-holes 3 formed in the aluminum substrate 5 having a property of attenuating light energy and the aluminum substrate 5 having a property of attenuating light energy is present around each of the absorptive regions 4. Further, the light attenuating regions 3a are formed by the dye having a property of attenuating light energy and permeating the absorptive membrane 2 from the adhesive agent layer 3 in the absorptive membrane 2 between the neighboring absorptive regions 4 so as to be adjacent to the aluminum substrate 5 in the thickness direction. Therefore, in the case of reading fluorescence data recorded in a number of the absorptive regions 4 of the biochemical analysis unit 1 using the data producing system shown in Figures 16 to 19, since it is possible to reliably prevent fluorescence emission released from a fluorescent substance such as a fluorescent dye contained in each of the absorptive regions 4 upon being excited by the stimulating ray from mixing with fluorescence emission released from neighboring absorptive regions 4, it is possible to reliably prevent noise caused by the scattering of fluorescence emission from being generated in biochemical analysis data produced by photoelectrically detecting fluorescence emission released from a number of the absorptive regions 4 formed in the biochemical analysis unit 1 and to produce biochemical analysis data having an excellent quantitative characteristic.

Furthermore, according to this embodiment, a number of the absorptive regions 4 of the biochemical analysis unit 1 are formed by pressing the absorptive membrane 2 into a number of the through-holes 3 formed in the aluminum substrate 5 having a property of attenuating light energy and the aluminum substrate 5 having a property of attenuating light energy is present around each of the absorptive regions 4. Further, the light attenuating regions 3a are formed by the dye having a property of attenuating light energy and permeating the absorptive membrane 2 from the adhesive agent layer 3 in the absorptive membrane 2 between the neighboring absorptive regions 4 so as to be adjacent to the aluminum substrate 5 in the thickness direction. Therefore, since it is possible to reliably prevent chemiluminescence emission released from the labeling substance which generates chemiluminescence emission when it contacts a chemiluminescent substrate and contained in each of the absorptive regions 4 from being scattered in the absorptive membrane 2 and mixing with chemiluminescence emission released from the labeling substance which generates chemiluminescence emission when it contacts a chemiluminescent substrate and is contained in neighboring absorptive regions 4, it is possible to reliably prevent noise caused by the scattering of chemiluminescence emission from being generated in biochemical analysis data produced by photoelectrically detecting chemiluminescence emission released from a number of the absorptive regions 4 formed in the biochemical analysis unit 1 and to produce biochemical analysis data having an excellent quantitative characteristic.

Moreover, according to this embodiment, a number of the absorptive regions 4 of the biochemical analysis unit 1 are formed by pressing the absorptive membrane 2 into a number of the through-holes 3 formed in the aluminum substrate 5 having a property of attenuating radiation energy and the aluminum substrate 5 having a property of attenuating radiation energy is present around each of the absorptive regions 4. Further, the support 11 of the stimulable phosphor sheet 10 is made of nickel having a property of attenuating radiation energy. Therefore, when stimulable phosphor contained in a number of the stimulable phosphor layer regions 12 formed in the support 11 of the stimulable phosphor sheet 10 is to be exposed to a radioactive labeling substance contained in a number of the absorptive regions 4 formed in the biochemical analysis unit 1, it is possible to reliably prevent electron beams (β rays) released from the radioactive labeling substance contained in the absorptive regions 4 from being scattered inside of the biochemical analysis unit 1 or in the support 11 of the stimulable phosphor sheet 10 and all electron beams (β rays) released from the radioactive labeling substance contained in the absorptive regions 4 enter the stimulable phosphor layer regions 12 they face. Accordingly, even in the case of forming the absorptive regions 4 in the biochemical analysis unit 1 at a high density, since it is possible to reliably prevent electron beams (β rays) released from the radioactive labeling substance contained in the absorptive regions 4 from entering the stimulable phosphor layer regions 12 to be exposed to electron beams (β rays) released from neighboring absorptive regions 4, it is possible to effectively prevent noise caused by the scattering of electron beams (β rays) from being generated in biochemical analysis data produced by photoelectrically detecting stimulated emission 45 and to produce biochemical analysis data having an excellent quantitative characteristic.

Furthermore, according to this embodiment, since a number of the absorptive regions 4 of the biochemical analysis unit 1 are formed by pressing the absorptive membrane 2 into a number of the through-holes 3 formed in the aluminum substrate 5, cavities in the absorptive membrane 2 have been eliminated by the pressing operation in regions between neighboring absorptive regions 4. Therefore, since a solution of specific binding substances spotted in the absorptive regions 4 can be effectively prevented from diffusing to regions of the absorptive membrane 2 other than the absorptive regions 4 and the specific binding substances spotted in the absorptive regions 4 are absorbed only in the absorptive regions 4, the quantitative characteristic of biochemical analysis can be markedly improved.

Moreover, according to this embodiment, since the biochemical analysis unit 1 is formed by pressing the absorptive membrane 2 into a number of the through-holes 3 formed in the aluminum substrate 5, the biochemical analysis unit 1 does not stretch or shrink even when it is subjected to liquid processing such as hybridization.

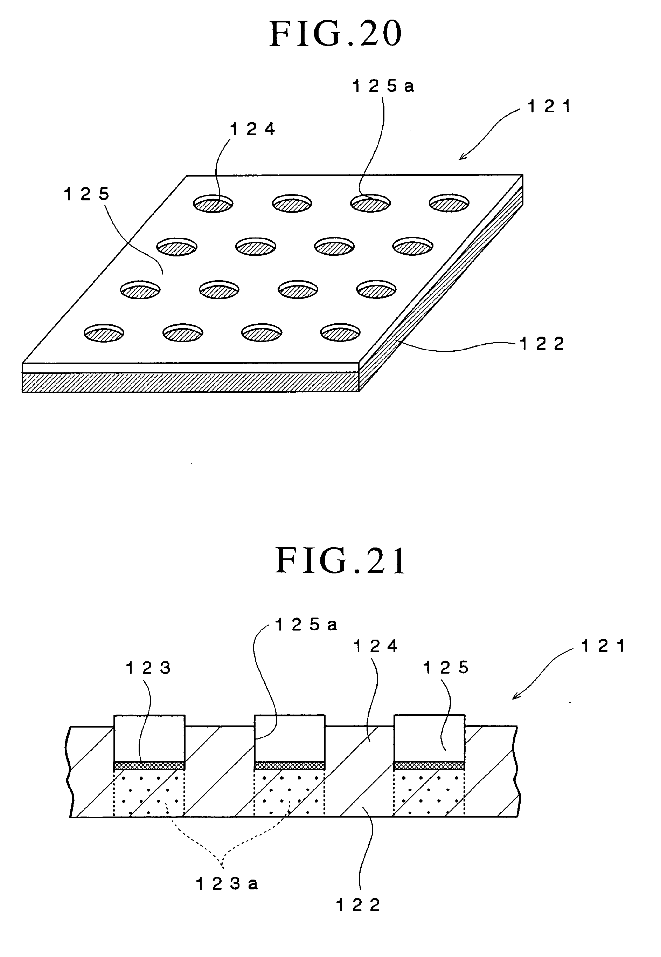

Figure 20 is a schematic perspective view showing a biochemical analysis unit which is another preferred embodiment of the present invention and Figure 21 is a schematic partial cross-sectional view thereof.

As shown in Figures 20 and 21, a biochemical analysis unit 121 according to this embodiment includes an absorptive membrane 122 formed of nylon 6 capable of forming a membrane filter and the absorptive membrane 122 is bonded by an adhesive agent layer 123 onto the surface of an aluminum substrate 125 formed with a number of through-holes 125a in a regular pattern so that a number of absorptive regions 124 are formed by the absorptive membrane 122 within the through-holes 125a of the aluminum substrate 125 so as to be spaced apart from each other.

A dye having a property of attenuating light energy is added into the adhesive agent layer 123 and the dye permeates the absorptive membrane 122. As a result, light attenuating regions 123a are formed in the absorptive membrane 122 between the neighboring absorptive regions 124 so as to be adjacent to the aluminum substrate 125 in the thickness direction.

Although not accurately shown in Figure 20, in this embodiment, 19,200 substantially circular absorptive regions 124 having a size of about 0.01 mm² are regularly formed in the manner of a matrix of 120 columns x 160 lines in the biochemical analysis unit 121.

As shown in Figure 21, the biochemical analysis unit 121 is formed by pressing the absorptive membrane 122 into a number of the through-holes 125a formed in the aluminum substrate 125 in such a manner that the surface of the aluminum substrate 125 is located above the surface of each of the absorptive regions 124.

In this embodiment, the biochemical analysis unit 121 is prepared by pressing the absorptive membrane 122 into a number of the through-holes 125a formed in the aluminum substrate 125 by a heat press apparatus.

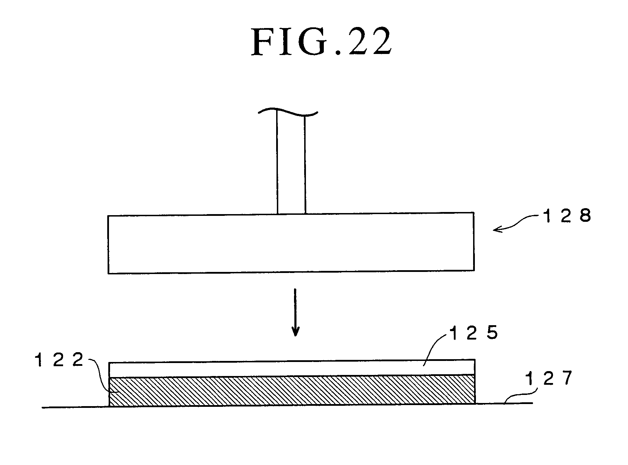

Figure 22 is a schematic cross sectional view showing a heat press apparatus.

As shown in Figure 22, a heat press apparatus includes a base 127 and a temperature-controlled press plate 128.

The absorptive membrane 122 is first set on the base 127 and the aluminum substrate 125 formed with a number of the through-holes 125a is set on the absorptive membrane 122.

Then, the aluminum substrate 125 is pressed by the press plate 128, thereby pressing the absorptive membrane 122 into a number of the through-holes 125a formed in the aluminum substrate 125 to form a number of the absorptive regions 124.

In this embodiment, similarly to the case of using the biochemical analysis unit 1 of the previous embodiment shown in Figures 1 and 2, a solution containing specific binding substances such as cDNAs is spotted using the spotting device in a number of the absorptive regions 124 formed in the biochemical analysis unit 121, whereby the specific binding substances are absorbed in the absorptive regions 124.

Further, as shown in Figure 5, the biochemical analysis unit 121 is set in a hybridization reaction solution 9 containing a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye accommodated in the hybridization reaction vessel 8 and a substance derived from a living organism, labeled with a radioactive labeling substance and contained in the hybridization reaction solution 9, a substance derived from a living organism, labeled with a labeling substance which generates chemiluminescence emission when it contacts a chemiluminescent substrate and contained in the hybridization reaction solution 9 and a substance derived from a living organism, labeled with a fluorescent substance such as a fluorescent dye and contained in the hybridization reaction solution 9 are selectively hybridized with the specific binding substances such as cDNAs absorbed in a number of the absorptive regions 124.

In this manner, radiation data, chemiluminescence data and fluorescence data are recorded in a number of the absorptive regions 124 of the biochemical analysis unit 121.

Similarly to the previous embodiment, fluorescence data recorded in the biochemical analysis unit 121 are read by the scanner shown in Figures 8 to 15 or the cooled CCD camera 81 of the data producing system shown in Figures 16 to 19, whereby biochemical analysis data are produced.

In the case where fluorescence data recorded in the biochemical analysis unit 121 are read by the scanner shown in Figures 8 to 15, in this embodiment, since a number of the absorptive regions 124 of the biochemical analysis unit 121 are formed to be spaced apart from each other by the absorptive membrane 122 within a number of the through-holes 125a formed in the aluminum substrate 125 having a property of attenuating light energy and the dye having a property of attenuating light energy and contained in the adhesive agent layer 123 permeates the absorptive membrane 122 to form the light attenuating regions 123a in the absorptive membrane 122 between the neighboring absorptive regions 124 so as to be adjacent to the aluminum substrate 125 in the thickness direction, it is possible to reliably prevent fluorescence emission 45 released from a fluorescent substance such as a fluorescent dye contained in each of the absorptive regions 124 upon being excited by the laser beam 24 from advancing to neighboring absorptive regions 124. Therefore, since it is possible to effectively lead fluorescence emission 45 released from a fluorescent substance such as a fluorescent dye contained in each of the absorptive regions 124 upon being excited by the laser beam 24 to the photomultiplier 50 and detect it, it is possible to reliably prevent noise caused by the scattering of fluorescence emission 45 released from a fluorescent substance in the absorptive membrane 122 from being generated in biochemical analysis data produced by photoelectrically detecting fluorescence emission 45 released from a fluorescent substance and to produce biochemical analysis data having an excellent quantitative characteristic.

On the other hand, in the case where fluorescence data recorded in the biochemical analysis unit 121 are read by the cooled CCD camera 81 of the data producing system shown in Figures 16 to 19, since a number of the absorptive regions 124 of the biochemical analysis unit 121 are formed to be spaced apart from each other by the absorptive membrane 122 within a number of the through-holes 125a formed in the aluminum substrate 125 having a property of attenuating light energy and the dye having a property of attenuating light energy and contained in the adhesive agent layer 123 permeates the absorptive membrane 122 to form the light attenuating regions 123a in the absorptive membrane 122 between the neighboring absorptive regions 124 so as to be adjacent to the aluminum substrate 125 in the thickness direction, it is possible to reliably prevent fluorescence emission released from a fluorescent substance such as a fluorescent dye contained in each of the absorptive regions 124 upon being excited by the stimulating ray from mixing with fluorescence emission released from neighboring absorptive regions 124. Therefore, since it is possible to reliably prevent noise caused by the scattering of fluorescence emission from being generated in biochemical analysis data produced by photoelectrically detecting fluorescence emission released from a number of the absorptive regions 124 formed in the biochemical analysis unit 121 and to produce biochemical analysis data having an excellent quantitative characteristic.

To the contrary, similarly to the previous embodiment, chemiluminescence data recorded in the biochemical analysis unit 121 are read by the cooled CCD camera 81 of the data producing system shown in Figures 16 to 19, whereby biochemical analysis data are produced.

In this embodiment, since a number of the absorptive regions 124 of the biochemical analysis unit 121 are formed to be spaced apart from each other by the absorptive membrane 122 within a number of the through-holes 125a formed in the aluminum substrate 125 having a property of attenuating light energy and the dye having a property of attenuating light energy and contained in the adhesive agent layer 123 permeates the absorptive membrane 122 to form the light attenuating regions 123a in the absorptive membrane 122 between the neighboring absorptive regions 124 so as to be adjacent to the aluminum substrate 125 in the thickness direction, when chemiluminescence emission is detected, it is possible to reliably prevent chemiluminescence emission released from the labeling substance which generates chemiluminescence emission when it contacts a chemiluminescent substrate and contained in each of the absorptive regions 124 from being scattered in the absorptive membrane 122 and mixing with chemiluminescence emission released from the labeling substance which generates chemiluminescence emission when it contacts a chemiluminescent substrate and is contained in neighboring absorptive regions 124. Therefore, it is possible to reliably prevent noise caused by the scattering of chemiluminescence emission from being generated in biochemical analysis data produced by photoelectrically detecting chemiluminescence emission released from a number of the absorptive regions 124 formed in the biochemical analysis unit 121 and to produce biochemical analysis data having an excellent quantitative characteristic.

On the other hand, similarly to the previous embodiment, radiation data of a radioactive labeling substance recorded in the biochemical analysis unit 121 are transferred onto a number of the stimulable phosphor layer regions 12 of the stimulable phosphor sheet 10 by exposing stimulable phosphor contained in a number of the stimulable phosphor layer regions 12 of the stimulable phosphor sheet 10 to a radioactive labeling substance contained in a number of the absorptive regions 124 of the biochemical analysis unit 121.

In this embodiment, since the biochemical analysis unit 121 is formed by bonding the absorptive membrane 122 formed of nylon-6 onto the surface of an aluminum substrate 125 formed with a number of through-holes 125a in a regular pattern by the adhesive agent layer 123, the biochemical analysis unit 121 does not stretch or shrink even when it is subjected to liquid processing such as hybridization. Therefore, it is possible to easily and accurately superpose the stimulable phosphor sheet 10 on the biochemical analysis unit 121 so that each of absorptive regions 124 formed in the biochemical analysis unit 121 accurately faces the corresponding stimulable phosphor layer region 12 formed in the support 11 of the stimulable phosphor sheet 10, thereby exposing a number of the stimulable phosphor layer regions 12 formed in the support 11 of the stimulable phosphor sheet 10.

During the exposure operation, electron beams (β rays) are released from the radioactive labeling substance absorbed in the absorptive regions 124 of the biochemical analysis unit 121. However, since a number of the absorptive regions 124 are formed by the absorptive membrane 122 within a number of the through-holes 123 of the aluminum substrate 125, electron beams (β rays) released from a particular absorptive region 124 of the biochemical analysis unit 121 can be efficiently prevented from mixing with electron beams (β rays) released from neighboring absorptive regions 124 and entering stimulable phosphor layer regions 12 next the stimulable phosphor layer region 12 corresponding thereto. Further, since a number of the stimulable phosphor layer regions 12 of the stimulable phosphor sheet 10 are formed by embedding stimulable phosphor in a number of the through-holes 13 formed in the support 11 made of nickel and the support 11 is capable of attenuating radiation energy, electron beams (β rays) released from the absorptive regions 124 of the biochemical analysis unit 121 can be efficiently prevented from scattering in the support 11 of the stimulable phosphor sheet 10 and entering stimulable phosphor layer regions 12 next to the corresponding stimulable phosphor layer region 12. Therefore, since it is possible to selectively impinge electron beams (β rays) released from the radioactive labeling substance contained in the individual absorptive regions 124 onto the corresponding stimulable phosphor layer regions 12, it is possible to reliably prevent electron beams (6 rays) released from the radioactive labeling substance contained in the individual absorptive regions 124 from entering the stimulable phosphor layer regions 12 of the stimulable phosphor sheet 10 to be exposed to electron beams (β rays) released from neighboring absorptive regions 124 and exposing stimulable phosphor contained therein.

Therefore, stimulable phosphor contained in a number of the stimulable phosphor layer regions 12 formed in the stimulable phosphor sheet 10 can be reliably exposed to only a radioactive labeling substance contained in the corresponding absorptive regions 124 of the biochemical analysis unit 121.

In this manner, radiation data of a radioactive labeling substance are recorded in a number of the stimulable phosphor layer regions 12 formed in the support 11 of the stimulable phosphor sheet 10 and similarly to the previous embodiment, the radiation data recorded in a number of the stimulable phosphor layer regions 12 are read by the scanner shown in Figures 8 to 15, whereby biochemical analysis data are produced.

According to this embodiment, since a number of the absorptive regions 124 of the biochemical analysis unit 121 are formed to be spaced apart from each other by the absorptive membrane 122 within a number of the through-holes 125a formed in the aluminum substrate 125 having a property of attenuating light energy and the dye having a property of attenuating light energy and contained in the adhesive agent layer 123 permeates the absorptive membrane 122 to form the light attenuating regions 123a in the absorptive membrane 122 between the neighboring absorptive regions 124 so as to be adjacent to the aluminum substrate 125 in the thickness direction, in the case where fluorescence data recorded in a number of the absorptive regions 124 of the biochemical analysis unit 121 are read by the scanner shown in Figures 8 to 15 to produce biochemical analysis data, it is possible to reliably prevent fluorescence emission 45 released from a fluorescent substance such as a fluorescent dye contained in each of the absorptive regions 124 upon being excited by the laser beam 24 from advancing to neighboring absorptive regions 124. Therefore, since it is possible to effectively lead fluorescence emission 45 released from a fluorescent substance such as a fluorescent dye contained in each of the absorptive regions 124 upon being excited by the laser beam 24 to the photomultiplier 50 and detect it, it is possible to reliably prevent noise caused by the scattering of fluorescence emission 45 released from a fluorescent substance in the absorptive membrane 122 from being generated in biochemical analysis data produced by photoelectrically detecting fluorescence emission 45 released from a fluorescent substance and to produce biochemical analysis data having an excellent quantitative characteristic.

Further, according to this embodiment, since a number of the absorptive regions 124 of the biochemical analysis unit 121 are formed to be spaced apart from each other by the absorptive membrane 122 within a number of the through-holes 125a formed in the aluminum substrate 125 having a property of attenuating light energy and the dye having a property of attenuating light energy and contained in the adhesive agent layer 123 permeates the absorptive membrane 122 to form the light attenuating regions 123a in the absorptive membrane 122 between the neighboring absorptive regions 124 so as to be adjacent to the aluminum substrate 125 in the thickness direction, in the case where fluorescence data recorded in a number of the absorptive regions 124 of the biochemical analysis unit 121 are read by the cooled CCD camera of the data producing system shown in Figures 16 to 19 to produce biochemical analysis data, it is possible to reliably prevent fluorescence emission released from a fluorescent substance such as a fluorescent dye contained in each of the absorptive regions 124 upon being excited by the stimulating ray from mixing with fluorescence emission released from neighboring absorptive regions 124. Therefore, since it is possible to reliably prevent noise caused by the scattering of fluorescence emission from being generated in biochemical analysis data produced by photoelectrically detecting fluorescence emission released from a number of the absorptive regions 124 formed in the biochemical analysis unit 121 and to produce biochemical analysis data having an excellent quantitative characteristic.

Furthermore, according to this embodiment, since a number of the absorptive regions 124 of the biochemical analysis unit 121 are formed to be spaced apart from each other by the absorptive membrane 122 within a number of the through-holes 125a formed in the aluminum substrate 125 having a property of attenuating light energy and the dye having a property of attenuating light energy and contained in the adhesive agent layer 123 permeates the absorptive membrane 122 to form the light attenuating regions 123a in the absorptive membrane 122 between the neighboring absorptive regions 124 so as to be adjacent to the aluminum substrate 125 in the thickness direction, in the case where chemiluminescence data recorded in a number of the absorptive regions 124 of the biochemical analysis unit 121 are read by the cooled CCD camera of the data producing system shown in Figures 16 to 19 to produce biochemical analysis data, it is possible to reliably prevent chemiluminescence emission released from the labeling substance which generates chemiluminescence emission when it contacts a chemiluminescent substrate and is contained in each of the absorptive regions 124 from being scattered in the absorptive membrane 122 and mixing with chemiluminescence emission released from the labeling substance which generates chemiluminescence emission when it contacts a chemiluminescent substrate and is contained in neighboring absorptive regions 124. Therefore, it is possible to reliably prevent noise caused by the scattering of chemiluminescence emission from being generated in biochemical analysis data produced by photoelectrically detecting chemiluminescence emission released from a number of the absorptive regions 124 formed in the biochemical analysis unit 121 and to produce biochemical analysis data having an excellent quantitative characteristic.

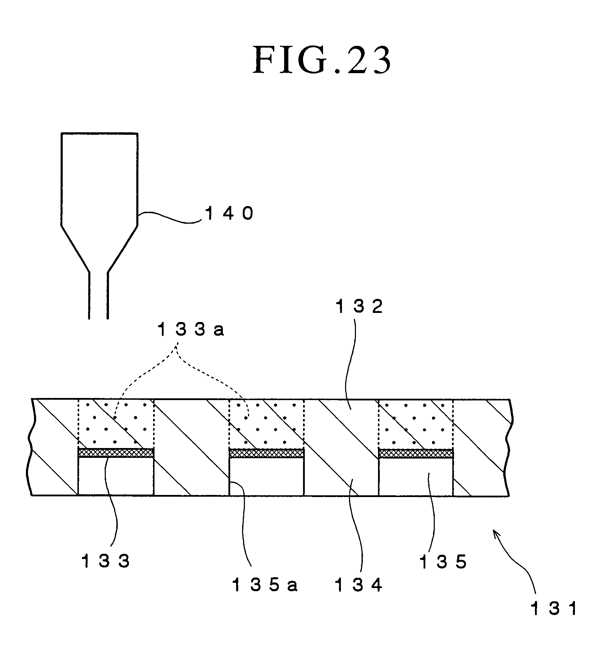

Figure 23 is a schematic cross sectional view showing a method for manufacturing a biochemical analysis unit which is a further preferred embodiment of the present invention.

As shown in Figure 23, a biochemical analysis unit 131 includes an absorptive membrane 132 formed of nylon-6 and an aluminum substrate 135 formed with a number of substantially circular through-holes 135a in a regular pattern into which the absorptive membrane 132 has been pressed by a calender processing apparatus to form a number of absorptive regions 134 regularly arranged so as to correspond to a number of the through-holes 135a formed in the aluminum substrate 135.

Although not accurately shown in Figure 23, in this embodiment, 19,200 substantially circular absorptive regions 134 having a size of about 0.01 mm² are regularly formed in the manner of a matrix of 120 columns x 160 lines in the biochemical analysis unit 131.

An adhesive agent layer 133 is formed on the reverse surface of the aluminum substrate 135 and the aluminum substrate 135 and the absorptive membrane 132 are firmly bonded via the adhesive agent layer 133, thereby improving the durability of the biochemical analysis unit 131.

As shown in Figure 23, in this embodiment, the biochemical analysis unit 131 is formed by pressing the absorptive membrane 132 into a number of the through-holes 135a formed in the aluminum substrate 135 in such a manner that the surface of each of the absorptive regions 134 and the surface of the aluminum substrate 135 are located at the same height level.

As shown in Figure 23, in this embodiment, a dye having a property of attenuating light energy is ejected from an ink jet ejection nozzle 140 toward those regions of the surface of the absorptive membrane 132 into which the aluminum substrate 135 is not pressed that face the aluminum substrate 135, namely, the surface of the absorptive membrane 132 located between neighboring absorptive regions 134 into which the aluminum substrate 135 is pressed, whereby the dye having a property of attenuating light energy is printed thereon.

The dye ejected from the ink jet ejection nozzle 140 permeates the absorptive membrane 132, whereby light attenuating regions 133a are formed in the absorptive membrane 132 between the neighboring absorptive regions 134 so as to be adjacent to the aluminum substrate 135 in the thickness direction.

In this embodiment, similarly to the case of using biochemical analysis unit 1 in the previous embodiment shown in Figures 1 and 2, a solution containing specific binding substances such as cDNAs is spotted using the spotting device in a number of the absorptive regions 134 formed in the biochemical analysis unit 131, whereby the specific binding substances are absorbed in the absorptive regions 134.

In this embodiment, since a number of the absorptive regions 134 of the biochemical analysis unit 131 are formed by pressing the absorptive membrane 132 into a number of the through-holes 135a regularly formed in the aluminum substrate 135, cavities in the absorptive membrane 132 have been eliminated by the pressing operation in regions between neighboring absorptive regions 134. Therefore, since the solution of specific binding substances spotted in the absorptive regions 134 can be effectively prevented from diffusing to regions of the absorptive membrane 132 other than the absorptive regions 134, the specific binding substances spotted in the absorptive regions 134 are absorbed only in the absorptive regions 134.

Further, as shown in Figure 5, the biochemical analysis unit 131 is set in a hybridization reaction solution 9 containing a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye accommodated in the hybridization reaction vessel 8 and a substance derived from a living organism, labeled with a radioactive labeling substance and contained in the hybridization reaction solution 9, a substance derived from a living organism, labeled with a labeling substance which generates chemiluminescence emission when it contacts a chemiluminescent substrate and contained in the hybridization reaction solution 9 and a substance derived from a living organism, labeled with a fluorescent substance such as a fluorescent dye and contained in the hybridization reaction solution 9 are selectively hybridized with the specific binding substances such as cDNAs absorbed in a number of the absorptive regions 134.

In this manner, radiation data, chemiluminescence data and fluorescence data are recorded in a number of the absorptive regions 134 of the biochemical analysis unit 131.

Similarly to the previous embodiments, fluorescence data recorded in the biochemical analysis unit 131 are read by the scanner shown in Figures 8 to 15 or the cooled CCD camera 81 of the data producing system shown in Figures 16 to 19, whereby biochemical analysis data are produced.

In the case where fluorescence data recorded in the biochemical analysis unit 131 are read by the scanner shown in Figures 8 to 15, in this embodiment, since a number of the absorptive regions 134 of the biochemical analysis unit 131 are formed by pressing the absorptive membrane 134 into a number of the through-holes 135a formed in the aluminum substrate 135 having a property of attenuating light energy, the aluminum substrate 135 having a property of attenuating light energy is present between neighboring absorptive regions 134 and the light attenuating regions 133a having a property of attenuating light energy are formed in the absorptive membrane 132 between the neighboring absorptive regions 134 so as to be adjacent to the aluminum substrate 135 in the thickness direction, it is possible to reliably prevent fluorescence emission 45 released from a fluorescent substance such as a fluorescent dye contained in each of the absorptive regions 134 upon being excited by the laser beam 24 from advancing to neighboring absorptive regions 134. Therefore, since it is possible to effectively lead fluorescence emission 45 released from a fluorescent substance such as a fluorescent dye contained in each of the absorptive regions 134 upon being excited by the laser beam 24 to the photomultiplier 50 and detect it, it is possible to reliably prevent noise caused by the scattering of fluorescence emission 45 released from a fluorescent substance in the absorptive membrane 132 from being generated in biochemical analysis data produced by photoelectrically detecting fluorescence emission 45 released from a fluorescent substance and to produce biochemical analysis data having an excellent quantitative characteristic.

On the other hand, in the case where fluorescence data recorded in the biochemical analysis unit 131 are read by the cooled CCD camera 81 of the data producing system shown in Figures 16 to 19, in this embodiment, since a number of the absorptive regions 134 of the biochemical analysis unit 131 are formed by pressing the absorptive membrane 134 into a number of the through-holes 135a formed in the aluminum substrate 135 having a property of attenuating light energy, the aluminum substrate 135 having a property of attenuating light energy is present between neighboring absorptive regions 134 and the light attenuating regions 133a having a property of attenuating light energy are formed in the absorptive membrane 132 between the neighboring absorptive regions 134 so as to be adjacent to the aluminum substrate 135 in the thickness direction, it is possible to reliably prevent fluorescence emission released from a fluorescent substance such as a fluorescent dye contained in each of the absorptive regions 134 upon being excited by the stimulating ray from mixing with fluorescence emission released from neighboring absorptive regions 134. Therefore, it is possible to reliably prevent noise caused by the scattering of fluorescence emission from being generated in biochemical analysis data produced by photoelectrically detecting fluorescence emission released from a number of the absorptive regions 134 formed in the biochemical analysis unit 131 and to produce biochemical analysis data having an excellent quantitative characteristic.

To the contrary, similarly to the previous embodiments, chemiluminescence data recorded in the biochemical analysis unit 131 are read by the cooled CCD camera 81 of the data producing system shown in Figures 16 to 19, whereby biochemical analysis data are produced.

In this embodiment, a number of the absorptive regions 134 of the biochemical analysis unit 121 are formed by pressing the absorptive membrane 134 into a number of the through-holes 135a formed in the aluminum substrate 135 having a property of attenuating light energy and the aluminum substrate 135 having a property of attenuating light energy is present between neighboring absorptive regions 134. Further, the light attenuating regions 133a having a property of attenuating light energy are formed in the absorptive membrane 132 between the neighboring absorptive regions 134 so as to be adjacent to the aluminum substrate 135 in the thickness direction. Therefore, in the case where chemiluminescence data recorded in a number of the absorptive regions 134 of the biochemical analysis unit 131 are read by the cooled CCD camera of the data producing system shown in Figures 16 to 19 to produce biochemical analysis data, since it is possible to reliably prevent chemiluminescence emission released from the labeling substance which generates chemiluminescence emission when it contacts a chemiluminescent substrate and contained in each of the absorptive regions 134 from being scattered in the absorptive membrane 132 and mixing with chemiluminescence emission released from the labeling substance which generates chemiluminescence emission when it contacts a chemiluminescent substrate and is contained in neighboring absorptive regions 134, it is possible to reliably prevent noise caused by the scattering of chemiluminescence emission from being generated in biochemical analysis data produced by photoelectrically detecting chemiluminescence emission released from a number of the absorptive regions 124 formed in the biochemical analysis unit 121 and to produce biochemical analysis data having an excellent quantitative characteristic.

On the other hand, similarly to the previous embodiments, radiation data of a radioactive labeling substance recorded in the biochemical analysis unit 131 are transferred onto a number of the stimulable phosphor layer regions 12 of the stimulable phosphor sheet 10 by exposing stimulable phosphor contained in a number of the stimulable phosphor layer regions 12 of the stimulable phosphor sheet 10 to a radioactive labeling substance contained in a number of the absorptive regions 134 of the biochemical analysis unit 131.

In this embodiment, since the biochemical analysis unit 131 is formed by pressing the absorptive membrane 132 into a number of the through-holes 135a formed in the aluminum substrate 135, the biochemical analysis unit 131 does not stretch or shrink even when it is subjected to liquid processing such as hybridization. Therefore, it is possible to easily and accurately superpose the stimulable phosphor sheet 10 on the biochemical analysis unit 131 so that each of absorptive regions 134 formed in the biochemical analysis unit 131 accurately faces the corresponding stimulable phosphor layer region 12 formed in the support 11 of the stimulable phosphor sheet 10, thereby exposing a number of the stimulable phosphor layer regions 12 formed in the support 11 of the stimulable phosphor sheet 10.

During the exposure operation, electron beams (β rays) are released from the radioactive labeling substance absorbed in the absorptive regions 134 of the biochemical analysis unit 131. However, since a number of the absorptive regions 134 are formed by pressing the absorptive membrane 132 into a number of the through-holes 135a formed in the aluminum substrate 135 and the aluminum substrate 135 having a property of attenuating radiation energy is present around each of the absorptive regions 134, electron beams (β rays) released from a particular absorptive region 134 of the biochemical analysis unit 131 can be efficiently prevented from being scattered and mixing with electron beams (β rays) released from neighboring absorptive regions 134 and entering stimulable phosphor layer regions 12 next the stimulable phosphor layer region 12 corresponding thereto. Further, since a number of the stimulable phosphor layer regions 12 of the stimulable phosphor sheet 10 are formed by embedding stimulable phosphor in a number of the through-holes 13 formed in the support 11 made of nickel and having a property of attenuating radiation energy, electron beams (β rays) released from the absorptive regions 134 of the biochemical analysis unit 131 can be efficiently prevented from being scattered in the support 11 of the stimulable phosphor sheet 10 and entering stimulable phosphor layer regions 12 next to the corresponding stimulable phosphor layer region 12. Therefore, since it is possible to selectively impinge electron beams (β rays) released from the radioactive labeling substance contained in the individual absorptive regions 134 onto the corresponding stimulable phosphor layer regions 12, it is possible to reliably prevent electron beams (β rays) released from the radioactive labeling substance contained in the individual absorptive regions 134 from entering the stimulable phosphor layer regions 12 of the stimulable phosphor sheet 10 to be exposed to electron beams (β rays) released from neighboring absorptive regions 134 and exposing stimulable phosphor contained therein.

Therefore, stimulable phosphor contained in a number of the stimulable phosphor layer regions 12 formed in the stimulable phosphor sheet 10 can be reliably exposed to only a radioactive labeling substance contained in the corresponding absorptive regions 134 of the biochemical analysis unit 131.

In this manner, radiation data of a radioactive labeling substance are recorded in a number of the stimulable phosphor layer regions 12 formed in the support 11 of the stimulable phosphor sheet 10 and similarly to the previous embodiment; the radiation data recorded in a number of the stimulable phosphor layer regions 12 are read by the scanner shown in Figures 8 to 15, whereby biochemical analysis data are produced.

According to this embodiment, a number of the absorptive regions 134 of the biochemical analysis unit 131 are formed by pressing the absorptive membrane 134 into a number of the through-holes 135a formed in the aluminum substrate 135 having a property of attenuating light energy and the aluminum substrate 135 having a property of attenuating light energy is present around each of the absorptive regions 134. Further, the dye having a property of attenuating light energy is ejected from an ink jet ejection nozzle 140 toward those regions of the surface of the absorptive membrane 132 into which the aluminum substrate 135 is not pressed that face the aluminum substrate 135 to be printed thereon and the printed dye permeates the absorptive membrane 134, whereby the light attenuating regions 133a having a property of attenuating light energy are formed in the absorptive membrane 132 between the neighboring absorptive regions 134 so as to be adjacent to the aluminum substrate 135 in the thickness direction. Therefore, in the case where fluorescence data recorded in a number of the absorptive regions 134 of the biochemical analysis unit 131 are read by the scanner shown in Figures 8 to 15 to produce biochemical analysis data, since it is possible to reliably prevent fluorescence emission 45 released from a fluorescent substance such as a fluorescent dye contained in each of the absorptive regions 134 upon being excited by the laser beam 24 from advancing to neighboring absorptive regions 134, it is possible to effectively lead fluorescence emission 45 released from a fluorescent substance such as a fluorescent dye contained in each of the absorptive regions 134 upon being excited by the laser beam 24 to the photomultiplier 50 and detect it. Accordingly, it is possible to reliably prevent noise caused by the scattering of fluorescence emission 45 released from a fluorescent substance in the absorptive membrane 132 from being generated in biochemical analysis data produced by photoelectrically detecting fluorescence emission 45 released from a fluorescent substance and to produce biochemical analysis data having an excellent quantitative characteristic.

Furthermore, according to this embodiment, a number of the absorptive regions 134 of the biochemical analysis unit 131 are formed by pressing the absorptive membrane 134 into a number of the through-holes 135a formed in the aluminum substrate 135 having a property of attenuating light energy and the aluminum substrate 135 having a property of attenuating light energy is present around each of the absorptive regions 134. Further, the dye having a property of attenuating light energy is ejected from an ink jet ejection nozzle 140 toward those regions of the surface of the absorptive membrane 132 into which the aluminum substrate 135 is not pressed that face the aluminum substrate 135 to be printed thereon and the printed dye permeates the absorptive membrane 134, whereby the light attenuating regions 133a having a property of attenuating light energy are formed in the absorptive membrane 132 between the neighboring absorptive regions 134 so as to be adjacent to the aluminum substrate 135 in the thickness direction. Therefore, in the case where fluorescence data recorded in the biochemical analysis unit 131 are read by the cooled CCD camera 81 of the data producing system shown in Figures 16 to 19 to produce biochemical analysis data, since it is possible to reliably prevent fluorescence emission released from a fluorescent substance such as a fluorescent dye contained in each of the absorptive regions 134 upon being excited by the stimulating ray from mixing with fluorescence emission released from neighboring absorptive regions 134, it is possible to reliably prevent noise caused by the scattering of fluorescence emission from being generated in biochemical analysis data produced by photoelectrically detecting fluorescence emission released from a number of the absorptive regions 134 formed in the biochemical analysis unit 131 and to produce biochemical analysis data having an excellent quantitative characteristic.

Moreover, according to this embodiment, a number of the absorptive regions 134 of the biochemical analysis unit 131 are formed by pressing the absorptive membrane 134 into a number of the through-holes 135a formed in the aluminum substrate 135 having a property of attenuating light energy and the aluminum substrate 135 having a property of attenuating light energy is present around each of the absorptive regions 134. Further, the dye having a property of attenuating light energy is ejected from an ink jet ejection nozzle 140 toward those regions of the surface of the absorptive membrane 132 into which the aluminum substrate 135 is not pressed that face the aluminum substrate 135 to be printed thereon and the printed dye permeates the absorptive membrane 134, whereby the light attenuating regions 133a having a property of attenuating light energy are formed in the absorptive membrane 132 between the neighboring absorptive regions 134 so as to be adjacent to the aluminum substrate 135 in the thickness direction. Therefore, in the case where chemiluminescence data recorded in a number of the absorptive regions 134 of the biochemical analysis unit 131 are read by the cooled CCD camera of the data producing system shown in Figures 16 to 19 to produce biochemical analysis data, since it is possible to reliably prevent chemiluminescence emission released from the labeling substance which generates chemiluminescence emission when it contacts a chemiluminescent substrate and contained in each of the absorptive regions 134 from being scattered in the absorptive membrane 132 and mixing with chemiluminescence emission released from the labeling substance which generates chemiluminescence emission when it contacts a chemiluminescent substrate and is contained in neighboring absorptive regions 134, it is possible to reliably prevent noise caused by the scattering of chemiluminescence emission from being generated in biochemical analysis data produced by photoelectrically detecting chemiluminescence emission released from a number of the absorptive regions 134 formed in the biochemical analysis unit 131 and to produce biochemical analysis data having an excellent quantitative characteristic.

Furthermore, according to this embodiment, a number of the absorptive regions 134 of the biochemical analysis unit 131 are formed by pressing the absorptive membrane 134 into a number of the through-holes 135a formed in the aluminum substrate 135 having a property of attenuating radiation energy and the aluminum substrate 135 having a property of attenuating radiation energy is present around each of the absorptive regions 134. Further, the support 11 of the stimulable phosphor sheet 10 is made of nickel having a property of attenuating radiation energy. Therefore, when stimulable phosphor contained in a number of the stimulable phosphor layer regions 12 formed in the support 11 of the stimulable phosphor sheet 10 is to be exposed to a radioactive labeling substance contained in a number of the absorptive regions 134 formed in the biochemical analysis unit 131, it is possible to reliably prevent electron beams (β rays) released from the radioactive labeling substance contained in the absorptive regions 134 from being scattered inside of the biochemical analysis unit 131 or in the support 11 of the stimulable phosphor sheet 10 and all electron beams (β rays) released from the radioactive labeling substance contained in the absorptive regions 134 enter the stimulable phosphor layer regions 12 they face. Accordingly, even in the case of forming the absorptive regions 134 in the biochemical analysis unit 131 at a high density, since it is possible to reliably prevent electron beams (β rays) released from the radioactive labeling substance contained in the absorptive regions 134 from entering the stimulable phosphor layer regions 12 to be exposed to electron beams (β rays) released from neighboring absorptive regions 134, it is possible to effectively prevent noise caused by the scattering of electron beams (β rays) from being generated in biochemical analysis data produced by photoelectrically detecting stimulated emission 45 and to produce biochemical analysis data having an excellent quantitative characteristic.

Moreover, according to this embodiment, since a number of the absorptive regions 134 of the biochemical analysis unit 131 are formed by pressing the absorptive membrane 132 into a number of the through-holes 135a formed in the aluminum substrate 135, cavities in the absorptive membrane 132 have been eliminated by the pressing operation in regions between neighboring absorptive regions 134. Therefore, since the solution of specific binding substances spotted in the absorptive regions 134 can be effectively prevented from diffusing to regions of the absorptive membrane 132 other than the absorptive regions 134 and the specific binding substances spotted in the absorptive regions 134 are absorbed only in the absorptive regions 134, the quantitative characteristic of biochemical analysis can be markedly improved.

Furthermore, according to this embodiment, since the biochemical analysis unit 131 is formed by pressing the absorptive membrane 132 into a number of the through-holes 135a formed in the aluminum substrate 135, the biochemical analysis unit 131 does not stretch or shrink even when it is subjected to liquid processing such as hybridization. Therefore, it is possible to easily and accurately superpose the stimulable phosphor sheet 10 on the biochemical analysis unit 131 so that each of absorptive regions 134 formed in the biochemical analysis unit 131 accurately faces the corresponding stimulable phosphor layer region 12 formed in the support 11 of the stimulable phosphor sheet 10, thereby exposing a number of the dot-like stimulable phosphor layer regions 12 formed in the support 11 of the stimulable phosphor sheet 10.

The present invention has thus been shown and described with reference to specific embodiments. However, it should be noted that the present invention is in no way limited to the details of the described arrangements but changes and modifications may be made without departing from the scope of the appended claims.

For example, in the embodiment shown in Figures 1 to 19 and the embodiment shown in Figures 20 to 13, the light attenuating regions 3a, 123a having a property of attenuating light energy are formed in the absorptive membrane 2, 122 by the dye contained in the adhesive agent layer 3, 123 formed on the aluminum substrate 5, 125. However, instead of adding the dye having a property of attenuating light energy, similarly to the embodiment shown in Figure 23, the light attenuating regions 3a, 123a may be formed in the absorptive membrane 2, 122 by ejecting a dye having a property of attenuating light energy from the ink jet ejection nozzle 140 toward those regions of the surface of the absorptive membrane 132 into which the aluminum substrate 5, 125 is not pressed that face the aluminum substrate 5, 125, namely, the surface of the absorptive membrane 2, 122 located between neighboring absorptive regions 4, 124 into which the aluminum substrate 5, 125 is pressed, thereby printing it thereon. Further, it is possible not only to add a dye having a property of attenuating light energy to the adhesive agent layer 3, 123 but in addition to eject a dye having a property of attenuating light energy from the ink jet ejection nozzle 140 toward those regions of the surface of the absorptive membrane 2, 122 into which the aluminum substrate 5, 125 is not pressed that face the aluminum substrate 5, 125, namely, the surface of the absorptive membrane 2, 122 located between neighboring absorptive regions 4, 124 into which the aluminum substrate 5, 125 is pressed to print it thereon so that the light attenuating regions 3a, 123a having a property of attenuating light energy are formed in the absorptive membrane 2, 122 by both the dye contained in the adhesive agent layer 3, 123 and the dye printed on the surface of the absorptive membrane 2, 122 located between neighboring absorptive regions 4, 124 into which the aluminum substrate 5, 125 is pressed.

Furthermore, in the embodiment shown in Figure 23, a dye having a property of attenuating light energy is ejected from the ink jet ejection nozzle 140 toward regions of the surface of the absorptive membrane 132 into which the aluminum substrate 135 is not pressed, namely, the surface of the absorptive membrane 132 located between neighboring absorptive regions 134 into which the aluminum substrate 135 is pressed, thereby printing it thereon and the light attenuating regions 133a are formed in the absorptive membrane 132 between the neighboring absorptive regions 134 so as to be adjacent to the aluminum substrate 135 in the thickness direction. However, it is possible to add a dye having a property of attenuating light energy into the adhesive agent layer 133 instead of printing the dye having a property of attenuating light energy on the surface of the absorptive membrane 132 located between neighboring absorptive regions 134 into which the aluminum substrate 135 is pressed and to form the light attenuating regions 133a having a property of attenuating light energy by the dye contained in the adhesive agent layer 133. Further, it is also possible not only to print a dye having a property of attenuating light energy on the surface of the absorptive membrane 132 located between neighboring absorptive regions 134 into which the aluminum substrate 135 is pressed but in addition to add a dye having a property of attenuating light energy into the adhesive agent layer 133 so that the light attenuating regions 133a having a property of attenuating light energy are formed in the absorptive membrane 132 by both the dye contained in the adhesive agent layer 133 and the dye printed on the surface of the absorptive membrane 132 located between neighboring absorptive regions 134 into which the aluminum substrate 135 is pressed.

Moreover, in the embodiment shown in Figures 1 to 19 and the embodiment shown in Figures 20 to 13, the dye having a property of attenuating light energy is added to the adhesive agent layer 3, 123 formed on the aluminum substrate 5, 125 and the light attenuating regions 3a, 123a having a property of attenuating light energy are formed in the absorptive membrane 2, 122 by the dye contained in the adhesive agent layer 3, 123, and in the embodiment shown in Figure 23, the dye having a property of attenuating light energy is ejected from the ink jet ejection nozzle 140 toward regions of the surface of the absorptive membrane 132 into which the aluminum substrate 135 is not pressed, namely, the surface of the absorptive membrane 132 located between neighboring absorptive regions 134 into which the aluminum substrate 135 is pressed, thereby printing it thereon and the light attenuating regions 133a are formed in the absorptive membrane 132 between the neighboring absorptive regions 134 so as to be adjacent to the aluminum substrate 135 in the thickness direction. However, it is not absolutely necessary to form the light attenuating regions 3a, 123a by adding the dye having a property of attenuating light energy into the adhesive agent layer 3, 123 or to form the light attenuating regions 133a by ejecting the dye having a property of attenuating light energy from the ink jet ejection nozzle 140 toward the surface of the absorptive membrane 132 located between neighboring absorptive regions 134 into which the aluminum substrate 135 is pressed, thereby printing it thereon but the light attenuating regions 3a, 123a, 133a may be formed by and any of various other methods. For example, the light attenuating regions 3a, 123a, 133a can be formed in the absorptive membrane 2, 122, 132 by applying a dye having a property of attenuating light energy on the aluminum substrate 5, 125, 135.

Furthermore, in the embodiment shown in Figure 23, although the dye is printed by the ink jet ejection nozzle 140 at those regions of the surface of the absorptive membrane 132 into which the aluminum substrate 135 is not pressed that face the aluminum substrate 135, it is not absolutely necessary to print the dye using the ink jet method but it is possible to print the dye at those regions of the surface of the absorptive membrane 132 into which the aluminum substrate 135 is not pressed that face the aluminum substrate 135 using an arbitrary printing method.

Moreover, in the above described embodiments, although the light attenuating regions 3a, 123a, 133a having a property of attenuating light energy are formed by the dye having a property of attenuating light energy, it is not absolutely necessary to employ a dye. The material used to form the light attenuating regions 3a, 123a, 133a may be of any type insofar as it can attenuate light energy and permeate the absorptive membrane 2, 122, 132. Specifically, a pigment and other materials may be employed instead of a dye.

Furthermore, in the above described embodiments, the absorptive membrane 2, 122, 132 of the biochemical analysis unit 1, 121, 131 is formed of nylon-6 capable of forming a membrane filter. However, it is not absolutely necessary to form the absorptive membrane 2, 122, 132 of nylon-6 but the absorptive membrane 2, 122, 132 of the biochemical analysis unit 1, 121, 131 may be formed of a porous material or a fiber material or the combination thereof instead of nylon-6. A porous material for forming the absorptive membrane 2, 122, 132 of the biochemical analysis unit 1, 121, 131 may be any type of an organic material or an inorganic material and may be an organic/inorganic composite material. As an organic porous material used for forming the absorptive membrane 2, 122, 132 of the biochemical analysis unit 1, 121, 131, a carbon porous material such as an activated carbon or a porous material capable of forming a membrane filter can be preferably used. Illustrative examples of porous materials include nylons such as nylon-6, nylon-6,6 and nylon-4,10; cellulose derivatives such as nitrocellulose, acetyl cellulose and butyric-acetyl cellulose; collagen; alginic acids such as alginic acid, calcium alginate and alginic acid/poly-L-lysine polyionic complex; polyolefins such as polyethylene and polypropylene; polyvinyl chloride; polyvinylidene chloride; polyfuorides such as polyvinylidene fluoride and polytetrafluoride; and copolymers or composite materials thereof. Illustrative examples of inorganic porous materials preferably usable for forming the absorptive membrane 2, 122, 132 of the biochemical analysis unit 1, 121, 131 include metals such as platinum, gold, iron, silver, nickel, aluminum and the like; metal oxides such as alumina, silica, titania, zeolite and the like; metal salts such as hydroxy apatite, calcium sulfate and the like; and composite materials thereof. A fiber material used for forming the absorptive membrane 2, 122, 132 of the biochemical analysis unit 1, 121, 131 is not particularly limited. Illustrative examples of fiber materials preferably usable in the present invention include nylons such as nylon-6, nylon-6,6 and nylon-4,10; and cellulose derivatives such as nitrocellulose, acetyl cellulose and butyric-acetyl cellulose.

Further, the biochemical analysis unit 1 is formed by pressing the absorptive membrane 2 using the pair of calender rolls into a number of the through-holes 5a formed in the aluminum substrate 5 in the embodiment shown in Figures 1 and 2 and the biochemical analysis unit 121 is formed by pressing the absorptive membrane 122 using the heat press processing apparatus into a number of the through-holes 125a formed in the aluminum substrate 125 in the embodiment shown in Figures 20 to 22. However, it is not absolutely necessary to press the absorptive membrane 2, 122 using the calender rolls or the heat press processing apparatus into the through-holes 5a, 125a formed in the aluminum substrate 5, 125 and the absorptive membrane 2, 122 may be pressed into a number of the through-holes 5a, 125a formed in the aluminum substrate 5, 125 using other appropriate means. Further, instead of pressing the absorptive membrane 2, 122, the biochemical analysis unit 1, 121 may be formed by charging the absorptive membrane 2, 122 into a number of the through-holes 5a, 125a formed in the aluminum substrate 5, 125 using other appropriate methods.

Furthermore, in the embodiment shown in Figures 1 and 2, the biochemical analysis unit 1 is formed by pressing the absorptive membrane 2 into a number of the through-holes 5a formed in the aluminum substrate 5, in the embodiment shown in Figures 20 to 22, the biochemical analysis unit 121 is formed by pressing the absorptive membrane 122 into a number of the through-holes 125a formed in the aluminum substrate 125 and in the embodiment shown in Figure 23, the biochemical analysis unit 131 is formed by pressing the absorptive membrane 132 into a number of the through-holes 135a formed in the aluminum substrate 135. However, it is not absolutely necessary to employ an aluminum substrate 5, 125, 135 but a substrate made of other material than aluminum can be employed. A material used for forming the substrate of the biochemical analysis unit preferably has a property of attenuating radiation energy but is not particularly limited as far as it can attenuate light energy. The material for forming the substrate of the biochemical analysis unit may be any type of inorganic compound material or organic compound material and the substrate of the biochemical analysis unit can preferably be formed of a metal material, a ceramic material or a plastic material. Illustrative examples of inorganic compound materials preferably usable for forming the substrate of the biochemical analysis unit include metals such as gold, silver, copper, zinc, aluminum, titanium, tantalum, chromium, iron, nickel, cobalt, lead, tin, selenium and the like; alloys such as brass, stainless steel, bronze and the like; silicon materials such as silicon, amorphous silicon, glass, quartz, silicon carbide, silicon nitride and the like; metal oxides such as aluminum oxide, magnesium oxide, zirconium oxide and the like; and inorganic salts such as tungsten carbide, calcium carbide, calcium sulfate, hydroxy apatite, gallium arsenide and the like. These may have either a monocrystal structure or a polycrystal sintered structure such as amorphous, ceramic or the like. On the other hand, a high molecular compound can preferably be used as an organic compound material preferably usable for forming the substrate of the biochemical analysis unit. Illustrative examples of high molecular compounds preferably usable for forming the substrate of the biochemical analysis unit in the present invention include polyolefins such as polyethylene, polypropylene and the like; acrylic resins such as polymethyl methacrylate, polybutylacrylate/polymethyl methacrylate copolymer and the like; polyacrylonitrile; polyvinyl chloride; polyvinylidene chloride; polyvinylidene fluoride; polytetrafluoroethylene; polychlorotrifluoroethylene; polycarbonate; polyesters such as polyethylene naphthalate, polyethylene terephthalate and the like; nylons such as nylon-6, nylon-6,6, nylon-4,10 and the like; polyimide; polysulfone; polyphenylene sulfide; silicon resins such as polydiphenyl siloxane and the like; phenol resins such as novolac and the like; epoxy resin; polyurethane; polystyrene, butadiene-styrene copolymer; polysaccharides such as cellulose, acetyl cellulose, nitrocellulose, starch, calcium alginate, hydroxypropyl methyl cellulose and the like; chitin; chitosan; urushi (Japanese lacquer); polyamides such as gelatin, collagen, keratin and the like; and copolymers of these high molecular materials. These may be a composite compound, and metal oxide particles, glass fiber or the like may be added thereto as occasion demands. Further, an organic compound material may be blended therewith.

Moreover, in the above described embodiments, although the absorptive membrane 2, 122, 132 is pressed into a number of the through-holes 5a, 125a, 135a formed in the aluminum substrate 5, 125, 135 via the adhesive agent layer 3, 123, 133, it is not absolutely necessary to press the absorptive membrane 2, 122, 132 into a number of the through-holes 5a, 125a, 135a formed in the aluminum substrate 5, 125, 135 via the adhesive agent layer 3, 123, 133.

Furthermore, in the above described embodiments, although 19,200 substantially circular absorptive regions 4, 124, 134 each having a size of about 0.01 mm² are regularly formed in the manner of a matrix in the biochemical analysis unit 1, 121, 131, the shape of each of the absorptive regions 4, 124, 134 is not limited to substantially a circular shape but may be formed in an arbitrary shape, for example, a rectangular shape.

Moreover, in the above described embodiments, although 19,200 substantially circular absorptive regions 4, 124, 134 each having a size of about 0.01 mm² are regularly formed in the manner of a matrix in the biochemical analysis unit 1, 121, 131, the number or size of the absorptive regions 4, 124, 134 may be arbitrarily selected in accordance with the purpose. Preferably, 10 or more of the absorptive regions 4, 124, 134 having a size of 5 cm² or less are formed in the biochemical analysis unit 1, 121, 131 at a density of 10/ cm² or greater.

Further, in the above described embodiments, although 19,200 substantially circular absorptive regions 4, 124, 134 each having a size of about 0.01 mm² are regularly formed in the manner of a matrix in the biochemical analysis unit 1, 121, 131, it is not absolutely necessary to form a number of the absorptive regions 4, 124, 134 in a regular pattern in the biochemical analysis unit 1, 121, 131.

Furthermore, in the above described embodiments, the hybridization reaction solution 9 containing a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye and the substance derived from a living organism contained in the hybridization reaction solution 9 is hybridized with specific binding substances absorbed in a number of the absorptive regions 4, 124, 134 of the biochemical analysis unit 1, 121, 131. However, it is not absolutely necessary to label a substance derived from a living organism with a radioactive labeling substance, a labeling substance which generates chemiluminescence emission when it contacts a chemiluminescent substrate and a fluorescent substance such as a fluorescent dye and it is sufficient for a substance derived from a living organism to be labeled with at least one kind of a labeling substance among a fluorescent substance and a labeling substance which generates chemiluminescence emission when it contacts a chemiluminescent substrate.

Moreover, in the above described embodiments, chemiluminescence data and fluorescence data are recorded in a number of the absorptive regions 4, 124, 134 of the biochemical analysis unit 1, 121, 131 by selectively hybridizing a substance derived from a living organism and labeled with a labeling substance which generates chemiluminescence emission when it contacts a chemiluminescent substrate and a substance derived from a living organism and labeled with a fluorescent substance with specific binding substances such as cDNAs fixed in a number of the absorptive regions 4, 124, 134 of the biochemical analysis unit 1, 121, 131. However, chemiluminescence data may be recorded in a number of the absorptive regions 4, 124, 134 of the biochemical analysis unit 1, 121, 131 by selectively hybridizing a substance derived from a living organism and labeled with a hapten with specific binding substances such as cDNAs fixed in a number of the absorptive regions 4, 124, 134 of the biochemical analysis unit 1, 121, 131 and binding an antibody for the hapten labeled with an enzyme which generates chemiluminescence emission when it contacts a chemiluminescent substrate with the hapten labeling the substance derived from a living organism by an antigen-antibody reaction. Further, fluorescence data may be recorded in a number of the absorptive regions 4, 124, 134 of the biochemical analysis unit 1, 121, 131 by selectively hybridizing a substance derived from a living organism and labeled with a hapten with specific binding substances such as cDNAs fixed in a number of the absorptive regions 4, 124, 134 of the biochemical analysis unit 1, 121, 131 and binding an antibody for the hapten labeled with an enzyme which generates a fluorescent substance when it contacts a fluorescent substrate with the hapten labeling the substance derived from a living organism by an antigen-antibody reaction. Illustrative examples of the combination of the hapten and the antibody include digoxigenin and anti-digoxigenin antibody, theophylline and anti-theophylline antibody, fluorosein and anti-fluorosein antibody, and the like. Further, the combination of biotin and avidin, antigen and antibody may be utilized instead of the combination of hapten and antibody.

Further, in the above described embodiments, the hybridization reaction solution 9 containing a substance derived from a living organism as a probe and labeled with a radioactive labeling substance is prepared and radiation data are recorded in a number of the absorptive regions 4, 124, 134 of the biochemical analysis unit 1, 121, 131 by selectively hybridizing the substance derived from a living organism and contained in the hybridization reaction solution 9 with specific binding substances fixed in a number of the absorptive regions 4, 124, 134 of the biochemical analysis unit 1, 121, 131. However, radiation data may be recorded in a number of the absorptive regions 4, 124, 134 of the biochemical analysis unit 1, 121, 131 by fixing an antibody or an antigen in a number of the absorptive regions 4, 124, 134 of the biochemical analysis unit 1, 121, 131, feeding an amino acid labeled with a radioactive labeling substance such as ³⁵S to a cell extracted from a living organism, thereby taking the radioactive labeling substance in an antigen or an antibody in the cell and selectively binding the antigen or the antibody labeled with a radioactive labeling substance with the antibody or the antigen fixed in a number of the absorptive regions 4, 124, 134 of the biochemical analysis unit 1, 121, 131 by an antigen-antibody reaction, or labeling an antigen or an antibody with ¹²⁵I by a chemical reaction and selectively binding the thus labeled antigen or antibody with the antibody or the antigen fixed in a number of the absorptive regions 4, 124, 134 of the biochemical analysis unit 1, 121, 131 by an antigen-antibody reaction.

Furthermore, in the above described embodiments, although a number of substantially circular stimulable phosphor layer regions 12 are formed in the support 11 of the stimulable phosphor sheet 10 in the same regular pattern as that of a number of the absorptive regions 4, 124, 134 of the biochemical analysis unit 1, 121, 131 so that each of them has the same size as that of the absorptive region 4, 124, 134 of the biochemical analysis unit 1, 121, 131, it is sufficient for a number of the stimulable phosphor layer regions 12 to be formed in the same pattern as that of a number of the absorptive regions 4, 124, 134 of the biochemical analysis unit 1, 121, 131 and it is not absolutely necessary to form a number of the stimulable phosphor layer regions 12 in a regular pattern.

Moreover, in the above described embodiments, although a number of substantially circular stimulable phosphor layer regions 12 are formed in the support 11 of the stimulable phosphor sheet 10 in the same regular pattern as that of a number of the absorptive regions 4, 124, 134 of the biochemical analysis unit 1, 121, 131 so that each of them has the same size as that of the absorptive region 4, 124, 134 of the biochemical analysis unit 1, 121, 131, the shape of each of the stimulable phosphor layer regions 12 is not limited to substantially a circular shape but may be formed in an arbitrary shape, for example, a rectangular shape.

Further, in the above described embodiments, although the support 11 of the stimulable phosphor sheet 10 is made of nickel, it is not absolutely necessary to make the support 11 of the stimulable phosphor sheet 10 of nickel and the support 11 of the stimulable phosphor sheet 10 can be made of a material other than nickel. The support 11 of the stimulable phosphor sheet 10 is preferably made of material capable of attenuating radiation energy and light energy but the material for forming the support 11 of the stimulable phosphor sheet 10 is not particularly limited. The support 11 of the stimulable phosphor sheet 10 can be formed of either inorganic compound material or organic compound material and is preferably formed of a metal material, a ceramic material or a plastic material. Illustrative examples of inorganic compound materials include metals such as gold, silver, copper, zinc, aluminum, titanium, tantalum, chromium, steel, nickel, cobalt, lead, tin, selenium and the like; alloys such as brass, stainless, bronze and the like; silicon materials such as silicon, amorphous silicon, glass, quartz, silicon carbide, silicon nitride and the like; metal oxides such as aluminum oxide, magnesium oxide, zirconium oxide and the like; and inorganic salts such as tungsten carbide, calcium carbide, calcium sulfate, hydroxy apatite, gallium arsenide and the like. These may have either a monocrystal structure or a polycrystal sintered structure such as amorphous, ceramic or the like. High molecular compounds are preferably used as organic compound material and illustrative examples thereof include polyolefins such as polyethylene, polypropylene and the like; acrylic resins such as polymethyl methacrylate, polybutylacrylate/polymethyl methacrylate copolymer and the like; polyacrylonitrile; polyvinyl chloride; polyvinylidene chloride; polyvinylidene fluoride; polytetrafluoroethylene; polychlorotrifluoroethylene; polycarbonate; polyesters such as polyethylene naphthalate, polyethylene terephthalate and the like; nylons such as nylon-6, nylon-6,6, nylon-4,10 and the like; polyimide; polysulfone; polyphenylene sulfide; silicon resins such as polydiphenyl siloxane and the like; phenol resins such as novolac and the like; epoxy resin; polyurethane; polystyrene, butadiene-styrene copolymer; polysaccharides such as cellulose, acetyl cellulose, nitrocellulose, starch, calcium alginate, hydroxypropyl methyl cellulose and the like; chitin; chitosan; urushi (Japanese lacquer); polyamides such as gelatin, collagen, keratin and the like; and copolymers of these high molecular materials. These may be a composite compound, and metal oxide particles, glass fiber or the like may be added thereto as occasion demands. Further, an organic compound material may be blended therewith.

Furthermore, in the above described embodiments, although a number of the stimulable phosphor layer regions 12 are formed in the support 11 of the stimulable phosphor sheet 10 so as to be spaced from each other, it is not absolutely necessary to form a number of the stimulable phosphor layer regions 12 in the support 11 of the stimulable phosphor sheet 10 so as to be spaced from each other and it is possible to uniformly form a stimulable phosphor layer containing stimulable phosphor on the support 11 of the stimulable phosphor sheet 10.

Moreover, in the above described embodiments, although radiation data of a radioactive labeling substance recorded in a number of the stimulable phosphor layer regions 12 in the stimulable phosphor sheet 10 and fluorescence data of a fluorescent substance such as a fluorescent dye recorded in a number of the absorptive regions 4, 124, 134 of the biochemical analysis unit 1, 121, 131 are read using the scanner shown in Figures 8 to 15 to produce biochemical analysis data, it is not absolutely necessary to read radiation data of a radioactive labeling substance and fluorescence data of a fluorescent substance using the same scanner and radiation data of a radioactive labeling substance and fluorescence data of a fluorescent substance may be read by separate scanners to produce biochemical analysis data.

Further, in the above described embodiments, although radiation data of a radioactive labeling substance recorded in a number of the stimulable phosphor layer regions 12 in the stimulable phosphor sheet 10 and fluorescence data of a fluorescent substance such as a fluorescent dye recorded in a number of the absorptive regions 4, 124, 134 of the biochemical analysis unit 1, 121, 131 are read using the scanner shown in Figures 8 to 15 to produce biochemical analysis data, it is not absolutely necessary to read radiation data of a radioactive labeling substance or fluorescence data of a fluorescent substance using the scanner shown in Figures 8 to 15 and any scanner constituted so as to scan a number of the stimulable phosphor layer regions 12 formed in the stimulable phosphor layer sheet 10 or a number of the absorptive regions 4, 124, 134 formed in biochemical analysis unit 1, 121, 131 and excite stimulable phosphor or a fluorescent substance with a laser beam 24 or stimulating ray may be used for reading radiation data of a radioactive labeling substance or fluorescence data of a fluorescent substance.

Furthermore, although the scanner shown in Figures 8 to 15 includes the first laser stimulating ray source 21, the second laser stimulating ray source 22 and the third laser stimulating ray source 23, it is not absolutely necessary for the scanner to include three laser stimulating ray sources.

Moreover, in the above described embodiments, although the data producing system shown in Figures 16 to 19 is constituted so as to read chemiluminescence data and fluorescence data to produce biochemical analysis data, it is not absolutely necessary to produce biochemical analysis data by reading chemiluminescence data of a labeling substance which generates chemiluminescence emission when it contacts a chemiluminescent substrate recorded in a number of the absorptive regions 4, 124, 134 of the biochemical analysis unit 1, 121, 131 using the data producing system which can also read fluorescence data and it is possible to read chemiluminescence data of a labeling substance which generates chemiluminescence emission when it contacts a chemiluminescent substrate recorded in a number of the absorptive regions 4, 124, 134 of the biochemical analysis unit 1, 121, 131 to produce biochemical analysis data using a data producing system which is not provided with the light emitting diode stimulating ray source 100, the filter 101, the filter 102 and the diffusion plate 103 and constituted so as to exclusively read chemiluminescence data.

Furthermore, in the above described embodiments, all of the stimulable phosphor layer regions 12 formed in the stimulable phosphor sheet 10 and all of the absorptive regions 4, 124, 134 formed in the biochemical analysis unit 1, 121, 131 are scanned with a laser beam 24 to excite stimulable phosphor or a fluorescent substance such as a fluorescent dye by moving the optical head 35 using a scanning mechanism in the main scanning direction indicated by the arrow X and the sub-scanning direction indicated by the arrow Y in Figure 14. However, all of the stimulable phosphor layer regions 12 formed in the stimulable phosphor sheet 10 and all of the absorptive regions 4, 124, 134 formed in the biochemical analysis unit 1, 121, 131 can be scanned with a laser beam 24 to excite stimulable phosphor or a fluorescent substance such as a fluorescent dye by moving the stage 40 in the main scanning direction indicated by the arrow X and the sub-scanning direction indicated by the arrow Y in Figure 14, while holding the stage 40 stationary. Further, the optical head 35 may be moved in one of the main scanning direction indicated by the arrow X and the sub-scanning direction indicated by the arrow Y in Figure 14, while the stage 40 is moved in the other direction.

Moreover, in the above-described embodiments, the scanner shown in Figures 8 to 15 employs the photomultiplier 50 as a light detector to photoelectrically detect fluorescence emission or stimulated emission. However, it is sufficient for the light detector used in the present invention to be able to photoelectrically detect fluorescence emission or stimulated emission and it is possible to employ a light detector such as a line CCD or a two-dimensional CCD instead of the photomultiplier 50.

Furthermore, in the above-described embodiments, although the data producing system includes the CRT 84 as a display means, it is not absolutely necessary to employ the CRT 84 as a display means and it is possible to employ a liquid crystal display panel, an organic electroluminescent display panel and the like instead of the CRT 84.

Moreover, in the above-described embodiments, a solution containing specific binding substances such as cDNAs is spotted using the spotting device including an injector 6 and a CCD camera 7 so that when the tip end portion of the injector 6 and the center of the absorptive region 4, 124, 134 into which a solution containing specific binding substances is to be spotted are determined to coincide with each other as a result of viewing them using the CCD camera 7, the solution of the specific binding substance such as cDNA is spotted from the injector 6. However, a solution containing specific binding substances such as cDNAs can be spotted by detecting the positional relationship between a number of the absorptive regions 4, 124, 134 formed in the biochemical analysis unit 1, 121, 131 and the tip end portion of the injector 6 in advance and two-dimensionally moving the biochemical analysis unit 1, 121, 131 or the tip end portion of the injector 6 so that the tip end portion of the injector 6 coincides with each of the absorptive regions 4, 124, 134.

According to the present invention, it is possible to provide a biochemical analysis unit which can produce biochemical analysis data having an excellent quantitative characteristic even in the case of forming at a high density on a biochemical analysis unit a plurality of spot-like regions containing specific binding substances which can specifically bind with a substance derived from a living organism and whose sequence, base length, composition and the like are known, selectively binding, using a hybridization method or the like, the specific binding substances contained in the plurality of spot-like regions with a substance derived from a living organism and labeled with a labeling substance which generates chemiluminescence emission when it contacts a chemiluminescent substrate and/or a fluorescent substance or selectively binding, using an antigen-antibody reaction, the specific binding substances contained in the plurality of spot-like regions with a substance derived from a living organism and labeled with a hapten by hybridization and an antibody for the hapten labeled with an enzyme having a property to generate chemiluminescence emission when it contacts a chemiluminescent substrate with the hapten and/or an enzyme having a property to generate a fluorescent substance when it contacts a fluorescent substrate, bringing the labeling substance selectively contained in the plurality of absorptive regions of the biochemical analysis unit into contact with a chemiluminescent substrate and photoelectrically detecting chemiluminescence emission generated by the contact of a chemiluminescent substrate and the labeling substance, and/or irradiating the plurality of spot-like regions formed in the biochemical analysis unit with a stimulating ray and photoelectrically detecting fluorescence emission.

## Claims

1. A biochemical analysis unit comprising a plate-like member made of a material capable of attenuating light energy and formed with a plurality of through-holes, a plurality of absorptive regions formed by charging an absorptive membrane formed of an absorptive material at positions corresponding to those of the plurality of through-holes formed in the plate-like member and light attenuating regions having a property of attenuating light energy and formed at regions in the absorptive membrane between the neighboring absorptive regions so as to be adjacent to the plate-like member in a thickness direction of the absorptive membrane.

2. A biochemical analysis unit in accordance with Claim 1 wherein the plurality of absorptive regions are formed by pressing the absorptive membrane in the plurality of through-holes formed in the plate-like member.

3. A biochemical analysis unit in accordance with Claim 2 wherein the plurality of absorptive regions are formed by pressing the absorptive membrane in the plurality of through-holes formed in the plate-like member using a heat press process.

4. A biochemical analysis unit in accordance with Claim 2 wherein the plurality of absorptive regions are formed by pressing the absorptive membrane in the plurality of through-holes formed in the plate-like member using a calender roll process.

5. A biochemical analysis unit in accordance with any one of Claims 1 to 4 wherein the plate-like member and the absorptive membrane are bonded with an adhesive agent.

6. A biochemical analysis unit in accordance with Claim 5 wherein the plate-like member and the absorptive membrane are bonded with an adhesive agent containing a material capable attenuating light energy and the light attenuating regions are formed of the material capable attenuating light energy contained in the adhesive agent.

7. A biochemical analysis unit in accordance with any one of Claims 1 to 5 wherein the light attenuating regions are formed of a material capable attenuating light energy printed on a surface of the absorptive membrane located between the neighboring absorptive regions opposite to the plate-like member.

8. A biochemical analysis unit in accordance with any one of Claims 1 to 7 wherein the plate-like member is made of a material that reduces the energy of light to 1/5 or less when the light travels in the plate-like member by a distance equal to that between neighboring absorptive regions.

9. A biochemical analysis unit in accordance with Claim 8 wherein the plate-like member is made of a material that reduces the energy of light to 1/100 or less when the light travels in the plate-like member by a distance equal to that between neighboring absorptive regions.

10. A biochemical analysis unit in accordance with any one of Claims 1 to 9 wherein each of the light attenuating regions is formed of a material that reduces the energy of light to 1/5 or less when the light travels in the light attenuating region by a distance equal to that between neighboring absorptive regions.

11. A biochemical analysis unit in accordance with Claim 10 wherein each of the light attenuating regions is formed of a material that reduces the energy of light to 1/100 or less when the light travels in the light attenuating region by a distance equal to that between neighboring absorptive regions.

12. A biochemical analysis unit in accordance with any one of Claims 1 to 11 wherein each of the light attenuating is formed of a dye and a pigment.

13. A biochemical analysis unit in accordance with any one of Claims 1 to 12 wherein the biochemical analysis unit is formed with 10 or more absorptive regions.

14. A biochemical analysis unit in accordance with any one of Claims 1 to 13 wherein each of the plurality of absorptive regions formed in the biochemical analysis unit has a size of less than 5 mm².

15. A biochemical analysis unit in accordance with any one of Claims 1 to 14 wherein the plurality of absorptive regions are formed in the biochemical analysis unit at a density of 10 or more per cm².

16. A biochemical analysis unit in accordance with any one of Claims 1 to 15 wherein the plate-like member of the biochemical analysis unit further has a property of attenuating radiation energy.

17. A biochemical analysis unit in accordance with Claim 16 wherein the plate-like member of the biochemical analysis unit is made of a material that reduces the energy of radiation to 1/5 or less when the radiation travels in the plate-like member by a distance equal to that between neighboring absorptive regions.

18. A biochemical analysis unit in accordance with Claim 17 wherein the plate-like member of the biochemical analysis unit is made of a material that reduces the energy of radiation to 1/100 or less when the radiation travels in the plate-like member by a distance equal to that between neighboring absorptive regions.
